# EUROPEAN PATENT APPLICATION

(11) **EP 4 737 056 A2**
(43) Date of publication of application: **06.05.2026**
(21) Application number: 26166232.4
(22) Date of filing: 31.07.2021
(51) Int. Cl.: B23K 103/00

(54) **METHODS AND SYSTEMS FOR MACHINING PRECISION MICRO HOLES INTO THICK CERAMIC SUBSTRATES**

(30) Priority: 01.08.2020 US 202063060016 P
(62) Divisional of application: 21766211.3
(71) Applicant: Avonisys AG, 6300 Zug (CH)
(72) Inventor: GAEBELEIN, Jens Guenter, Campo di Trens (IT); GIEBMANNS, Ralf, Geldern (DE); HRIBAR, Jeroen, Lucerne (CH)
(74) Representative: Mewburn Ellis LLP

(57) **Abstract**

A combination of a liquid jet and a mechanical rotary tool can be used to machine precision micro holes in thick substrates. A liquid-jet guided laser can be used to rapidly drill core holes into the ceramic substrate. A sensor can be applied to detect the cut through point of the liquid-jet guided laser drilling step to allow a rapid and closed-loop controlled machining process. The substrate can be heated up for speeding up a liquid-jet guided laser drilling process. A mechanical tool such as a drill, a reamer or a mill can be applied to finish the core holes to a desired bore diameter. The mechanical tool cutting main surface can preferably consist of a diamond material. An inspection camera and illumination system can be applied to inspect each mechanically finished bore as part of the drilling process.

## Description

### Background

Precision components, such as gas distribution and uniformity plates for semiconductor processing equipment, typically require hundreds or even thousands of small precision holes machined into thick ceramic substrates. For considerations of contamination avoidance to a Silicon or Silicon Carbide product wafer, these gas distribution and uniformity plates are typically made out of equally pure or purer materials such as Silicon or Silicon Carbide. In addition to the large number of holes, these holes require a high level of surface finish. The inner wall of each hole must be smooth, mirror-alike, to avoid adherence of unwanted particles that can potentially contaminate the actual product wafer. To ensure stable and repeatable gas distribution, the entrance as well as the exit of each hole must have a sharp edge without any circumferential damage.

Today, holes in gas distribution and uniformity plates are made in different ways. Holes can either be drilled sequentially using a drill bit. Holes can also be made sequentially using an electric discharge machining process in which the material inside the hole is eroded by a wire. In another way all holes, or groups of holes, can be machined simultaneously using an ultrasonic plate that removes the material inside the holes by means of ultrasonic vibration applied to a pin pattern that is inverse to that of the holes to be machined. Alternatively, all holes, or groups of holes can be machined simultaneously using an electric discharge machining process by means of an electrode plate with a pin pattern that is inverse to that of the holes to be eroded.

Whereas the methods of producing the holes simultaneously via ultrasonic processing or electric discharge machining can be relatively quick, typically each hole requires a post-processing step, such as reaming, to achieve the desired mirror-alike surface finish of each hole. Drilling the holes sequentially with a milling tool can typically achieve the desired mirror-alike surface finish without any post-processing. However, drilling with a mechanical drilling tool can introduce an increased risk of material chipping on the entrance and in particular on the exit side of the hole. In addition, there is substantial wear to the drilling tool and limited tool lifetime when processing ceramic materials such as, but not limited to Silicon and Silicon Carbide.

A typical gas distribution and/or uniformity plate can be 10-15mm thick and have 1000-2000 holes with a diameter of 0.2 - 0.8mm. Each hole can take 3-4 minutes to drill. If the drill bit breaks at for example hole 1480 of 1500, the entire substrate plate can potentially be scrapped, and many hours of machining work are lost. Thus, there is a substantial need for an improved and more efficient method for machining many small holes into thick ceramic substrates. A person skilled in the art will appreciate and understand that the present invention is not limited to holes in gas distribution and uniformity plates only but finds applicability to a wider range of technical ceramic materials and applications that require precision holes.

### Summary of the embodiments

In some embodiments, the present invention discloses methods and systems to machine precision micro holes in thick substrates. The substrate can be a ceramic material into which hundreds, or even thousands of holes are machined. The holes can be created by applying a hybrid process in which a core hole drilling process and a hole finishing process are applied. A liquid-jet guided laser can be used to rapidly drill core holes into the ceramic substrate. A sensor can be applied to detect the cut through point of the liquid-jet guided laser drilling step to allow a rapid and closed-loop controlled machining process. The substrate can be heated up for speeding up a liquid-jet guided laser drilling process. A mechanical tool such as a drill, a reamer or a mill can be applied to finish the core holes to a desired hole diameter. The mechanical tool cutting main surface can preferably consist of a diamond material. An inspection camera and illumination system can be applied to inspect each mechanically finished hole as part of the drilling process.

### Brief description of the drawings

Fig. 1A - 1B illustrate a substrate with a series of holes or bores according to some embodiments.
Figs. 2A - 2B illustrate configurations for hybrid processing of holes in a substrate according to some embodiments.
Figs. 3A - 3C illustrate flow charts for forming a hole in a substrate according to some embodiments.
Fig. 4 illustrates a configuration of a liquid-jet guided laser head according to some embodiments.
Fig. 5A - 5B illustrate a method for making holes in a substrate with a liquid-jet guided laser beam according to some embodiments.
Figs. 6A - 6B illustrate a sidewall roughness of the holes according to some embodiments.
Fig. 7 illustrates a flow chart for forming an initial hole in a substrate according to some embodiments.
Figs. 8A - 8D illustrate flow charts for forming initial holes in a substrate according to some embodiments.
Figs. 9A - 9B illustrate configurations of holes formed by a liquid jet according to some embodiments.
Figs. 10A - 10C illustrate flow charts for forming initial holes in a substrate according to some embodiments.
Figs. 11A - 11D illustrate configurations for heating a substrate for speeding up a liquid-jet guided laser hole forming process according to some embodiments.
Figs. 12A - 12D illustrate flow charts for conditioning a substrate temperature during a liquid jet process according to some embodiments.
Figs. 13A - 13C illustrate sensor configurations for a liquid-jet guided laser process to detect end points of the liquid jet process according to some embodiments.
Figs. 14A - 14B illustrate flow charts for detecting end points of the liquid jet process according to some embodiments.
Figs. 15A - 15D illustrate a process for forming an initial hole using a liquid jet and an electric discharge machining according to some embodiments.
Figs. 16A - 16B illustrate a process for forming an initial hole using an electric discharge machining according to some embodiments.
Figs. 17A - 17C illustrate flow charts for forming holes with an EDM process according to some embodiments.
Figs. 18A - 18B illustrate configurations for forming multiple holes in a substrate using a liquid jet according to some embodiments.
Fig. 19 illustrates a closed loop process for drilling holes with a liquid-jet guided laser according to some embodiments.
Figs. 20A - 20B illustrate a process for forming holes according to some embodiments.
Figs. 21A - 21C illustrate configurations for mechanical rotary tools according to some embodiments.
Figs. 22A - 22C illustrate flow charts for finishing a hole in a substrate according to some embodiments.
Figs. 23A - 23B illustrate processes for finishing initial through holes according to some embodiments.
Figs. 24A - 24C illustrate processes for finishing initial one-side blind holes according to some embodiments.
Figs. 25A - 25B illustrate processes for finishing initial two-side blind holes according to some embodiments.
Figs. 26A - 26B illustrate processes for finishing holes using two mechanical rotary tools according to some embodiments.
Figs. 27A - 27C illustrate flow charts for finishing initial holes in a substrate according to some embodiments. In
Figs. 28A - 28D illustrate configuration for cooling a rotary tool according to some embodiments.
Figs. 29A - 29C illustrate flow charts for cooling a mechanical rotary tool according to some embodiments.
Figs. 30A - 30B illustrate a configuration for an alignment module according to some embodiments.
Figs. 31A - 31B illustrate another configuration for an alignment module according to some embodiments.
Figs. 32A - 32B illustrate flow charts for aligning a mechanical rotary tool according to some embodiments.
Figs. 33A - 33B illustrate configurations for inspection modules according to some embodiments.
Figs. 34A - 34B illustrate flow charts for inspecting final holes in a substrate according to some embodiments.
Fig. 35 illustrates a flow chart for completely forming a hole in a substrate according to some embodiments.
Fig. 36 illustrates a configuration for an integrated system of a liquid jet and a mechanical rotary toll according to some embodiments.

### Detailed description of the embodiments

In some embodiments, the present invention discloses methods and systems for forming holes, such as through holes or blind holes, in a substrate. The formed holes can have inner smooth surfaces with sharp edges at hole entrance and exit. The holed substrates with the inner surface and edge requirements can be used in gas distribution and uniformity plates.

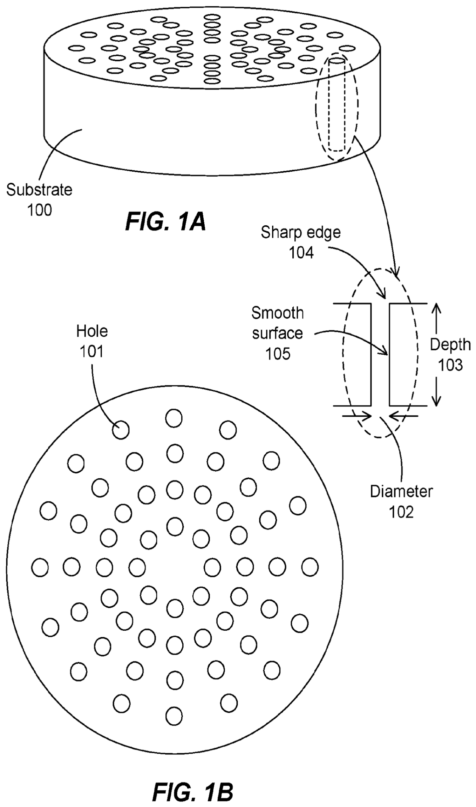

Fig. 1A - 1B illustrate a substrate with a series of holes or bores according to some embodiments. Gas distribution and uniformity plates for semiconductor processing equipment are a good example of substrates that typically require a large number of small precision holes or bores 101 machined into thick substrates 100. In addition to the large number of holes or bores 101, these holes or bores also require a high level of surface finish 105, together with sharp edges 104 with no damages at the entrance and exit of the holes or bores. The substrate thickness, e.g., depth 103 of the through holes or bores, e.g., holes or bores that pass completely through the substrate, can be less than 20 mm, such as between 10 and 15 mm. The size of the holes or bores, e.g., the diameter 102 of the holes or bores, can be small, e.g., less than 2 mm, such as between 0.1 to 1 mm, in order to provide a uniform gas distribution. Such substrates 100, for example, silicon or silicon carbide product wafers, typically have a round shape and contain hundreds or even thousands of precision holes or bores 101, to be used in gas distribution and uniformity plates. Round bores are typical, but for some applications also elongated holes or slots with rounded edges are applied. In the following description, round holes, such as holes formed by running a liquid jet along a circular contour, are described. But the invention is not limited to round holes, but elongated holes or slots with rounded edges are also included.

For considerations of contamination avoidance to silicon or silicon carbide substrates, the substrates are typically made out of equally pure or purer substrate materials such as also of silicon or silicon carbide. Other materials can be used, such as aluminum nitride, silicon nitride, titanium nitride, boron carbide as well as Ceramic Matrix Composites (CMC) and Metal Matrix Composites (MMC). Further, the substrate can also be metal substrates and other work pieces with bores or holes.

Ceramic matrix composites (CMC) consist of ceramic fibers embedded in a ceramic matrix. The fibers and the matrix both can consist of any ceramic material, with carbon and carbon fibers regarded as a ceramic material. CMC can improve crack resistance of a ceramic material by embedding particles or long strand fibers, thus can enhance the fracture toughness of the combined material system while keeping the high strength and Young's modulus of the ceramic matrix. Carbon (C), special silicon carbide (SiC), alumina (Al₂O₃) and mullite (Al₂O₃-SiO₂) fibers are most commonly used for CMC. The matrix materials of the CMC can be the same, e.g., also made of C, SiC, alumina and mullite. For example, common CMC include C/C, C/SiC, SiC/SiC and Al203/Al203, which can have higher elongation to rupture, increased fracture toughness, higher thermal shock resistance, and higher dynamical load capability.

Metal matrix composite (MMC) is a composite material with at least a metal component and a different metal or another material, such as a ceramic or organic compound. MMC can be made by dispersing a reinforcing material into a metal matrix. For example, carbon fibers can be used in an aluminum matrix to provide high strength with low density.

In some embodiments, the present invention discloses a hybrid process to form holes in a substrate, for example, that can meet the requirements of surface smoothness and edge sharpness with no damages for a gas distribution plate. The hybrid process can include an initial hole formation, for example, by a liquid-jet guided laser beam generated in a liquid-jet guided laser head of a liquid-jet guided laser system, or alternatively, by an electric discharge machining process. The hybrid process can include a hole smoothing or finishing process, for example, by a mechanical rotary tool, such as by a drill bit, a reamer bit, a honing bit, or a milling bit. The use of a mechanical rotary tool on a preexisting hole can greatly reduce potential damage to the edges of the finishing holes, together with the increasing throughput and reduce wear and tear on the mechanical rotary tool.

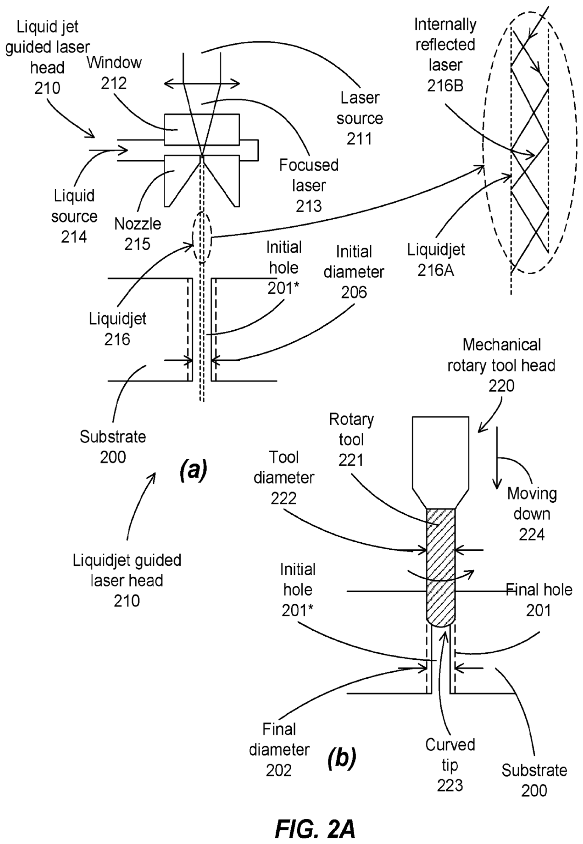

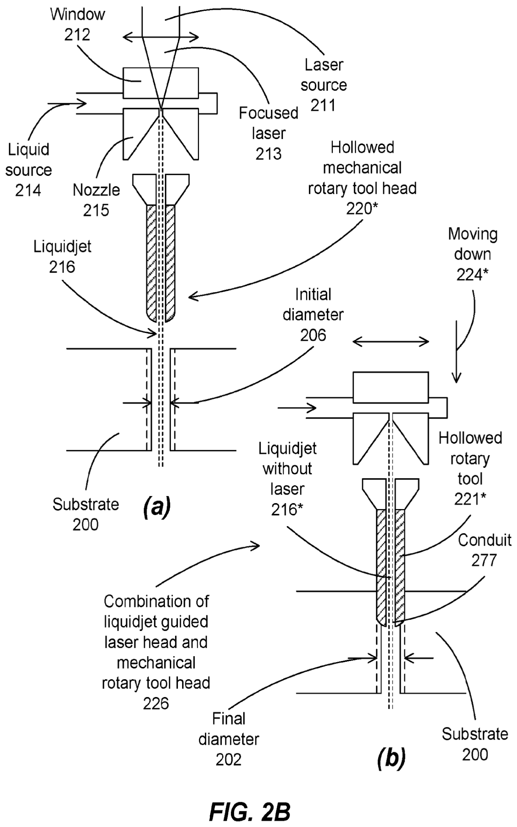

Figs. 2A - 2B illustrate configurations for hybrid processing of holes in a substrate according to some embodiments. Figs. 2A(a) - 2A(b) show a configuration in which the initial hole formation and the finishing hole process are performed in different equipment, such as forming the initial hole in a liquid-jet guided laser system and finishing the hole in a mechanical rotary system. Figs. 2B(a) - 2B(b) show a configuration in which the initial hole formation and the finishing hole process are performed in a same equipment, such as in a liquid-jet guided laser assembly configured with a mechanical rotary assembly.

In some embodiments, the initial hole formation can be performed in a liquid-jet guided laser system, which can include a liquid-jet guided laser head coupled to a motion mechanism, such as to a 2 dimensional xy motion or to a 3 dimension xyz motion. The liquid-jet guided laser head can be configured to generate a liquid-jet guided laser beam, which can be a liquid jet, e.g., a column of liquid, having a laser beam internally reflected within the liquid jet. The liquid jet can confine the laser beam, e.g., guiding the laser beam to be within the liquid jet. The liquid-jet guided laser beam can be used to remove materials from a substrate, for example, by a laser ablation process.

Fig. 2A(a) shows a liquid-jet guided laser head 210, which is configured to generate a liquid-jet guided laser beam 216, e.g., a liquid jet 216A having a laser beam 216B internally reflected within the liquid jet 216A. The laser beam 216B is configured for material removal, such as by a laser ablation process. The liquid jet 216A is configured to guide the laser beam 216B, such as to prevent the laser beam from being diverged.

A liquid source 214 can be provided to a nozzle 215 in the liquid-jet guided laser head 210. The nozzle can include an opening, from which the liquid jet 216A can exit. A laser source 211 can be focused by a lens, to form a focused laser beam 213 on the liquid jet 216A. The focused laser beam 213 can then internally reflected within the liquid jet 216A, e.g., forming the internally reflected laser beam 216B.

A window 212 can be disposed between the focus lens and the liquid source 214. The window 212 can be configured to let the laser beam to pass through, while preventing liquid from the liquid source 214 from contacting and contaminate the laser components.

The liquid jet 216, e.g., the liquid-jet guided laser beam, can be directed on a substrate 200, for example, to form a through hole 201* having an initial diameter 206. The liquid-jet guided laser head 210 can be moved in a close loop contour, such as in a circular contour or an clongated contour, which is essentially an area with rounded edges, for example, controlled by the xy motion mechanism. The liquid jet 216 can remove material from the circular contour to cut a cylinder having the initial diameter 206 similar to the diameter of the circular contour. After the liquid jet 216 passes through the substrate, the cut cylinder can be removed from the substrate, leaving a hole with the initial diameter 206 similar to the diameter of the circular contour.

The liquid-jet guided laser head 210 can be moved in a rastering path, such as in a spiral path or in multiple parallel lines confining in a close loop contour. The liquid jet 216 can remove material in the close loop contour by the spiral or the rastering lines to form a hole having the initial diameter 206 similar to the diameter of the close loop contour.

Fig. 2A(b) shows a mechanical rotary tool head 220, which is configured to finish the initial hole, such as enlarging the initial hole 201* into the final hole 201 having the final diameter 202, while also smoothing the inner surfaces of the final hole.

The mechanical rotary tool head 220 can include a mechanical rotary tool 221, which can have a tool diameter 222, which can be similar to the final diameter 202 of the final hole 201. In operation, the mechanical rotary tool 221 can rotate while moving down 224 into the initial hole 201*. The mechanical rotary tool 221 can have a rounded or oval tip 223, which can be configured to minimize damages to the edges of the final hole 201.

Figs. 2B(a) and 2B(b) show a combination system 226 having an assembly of a liquid-jet guided laser head 210 and an assembly of a mechanical hollowed rotary tool head 220*, which can be configured to form an initial hole together with finishing the initial hole. The liquid-jet guided laser head 210 can be similar as described above, which can be configured to generate a liquid-jet guided laser beam 216, e.g., a liquid jet having a laser beam internally reflected within the liquid jet. The liquid-jet guided laser beam 216 can be configured for making holes having an initial diameter 206 in a substrate, for example, by running multiple passes along a circular contour to cut away a cylindrical material, or by rastering multiple passes inside a close loop contour to form a hole inside the close loop contour.

For example, a liquid-jet guided laser head 210 can include a liquid source 214 configured to form a liquid jet 216 after passing a nozzle 215. A laser source 211 can be focused by a lens, to form a focused laser beam 213 on the liquid jet 216. A window 212 can be disposed between the focus lens and the liquid source 214.

The mechanical hollowed rotary tool head 220* can include a mechanical hollowed rotary tool 221*, which can have a conduit 277 passing through the rotary tool 221*. The mechanical hollowed rotary tool head 220* can be positioned so that the liquid jet from the liquid-jet guided laser head can enter the conduit 277, for example, to cool the mechanical hollowed rotary tool 221*.

In operation, the substrate 200 is positioned under the combination system 226. The liquid source 214 is turned on to form the liquid jet 216. The laser power source is turned on to generate a laser beam for internally reflected in the liquid jet 216. The liquid jet 216 is configured to pass through the mechanical rotary tool head 220*, e.g., passing through the conduit 277 without interfering with the mechanical rotary tool head 220*. The liquid jet 216 can form a hole in the substrate having an initial diameter 206 (Fig. 2B(a)).

After forming the initial hole, the laser source can be turned off, leaving the liquid jet 216 without the internally reflected laser beam. The combination system 226 can move down 224* with the mechanical rotary tool 221* rotating to finish the initial hole, e.g., to enlarge the initial hole to a final diameter 202, and to smooth the surface of the final hole (Fig. 2B(b)).

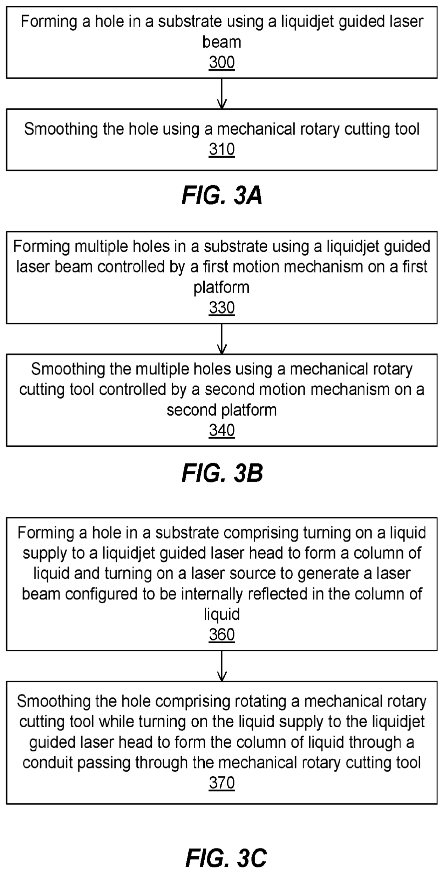

Figs. 3A - 3C illustrate flow charts for forming a hole in a substrate according to some embodiments. Fig. 3A forms a hole using different or same equipment. Operation 300 forms a hole in a substrate using a liquid jet guided laser beam. Operation 310 smoothens the hole using a mechanical rotary tool.

Fig. 3B forms multiple holes in a substrate using different equipment. Operation 330 forms multiple holes in a substrate using a liquid jet guided laser beam controlled by a first motion mechanism on a first platform. Operation 340 smoothens the multiple holes using a mechanical rotary tool, which is controlled by a second motion mechanism on a second platform.

Fig. 3C forms a hole in a substrate using a single equipment. Operation 360 forms a hole in a substrate, which can include turning on a liquid supply to a liquid jet guided laser head to form a column of liquid and turning on a laser source to generate a laser beam configured to be internally reflected in the column of liquid. Operation 370 smoothens the hole, which can include rotating a mechanical rotary tool while turning on the liquid supply to the liquid jet guided laser head to form the column of liquid through a conduit passing through the mechanical rotary tool.

In some embodiments, the present invention discloses forming initial holes in a substrate using a liquid-jet guided laser system. Liquid-jet guided laser technology, for example, as disclosed in patents U.S. 8,859,988 and U.S. 10,022,820, which are incorporated by reference in their entirety, is known for being capable of machining a wide range of materials, such as metals as well as ceramic materials, including silicon, silicon carbide, aluminum nitride, silicon nitride, titanium nitride, boron carbide, Ceramic Matrix Composites (CMC) and Metal Matrix Composites (MMC).

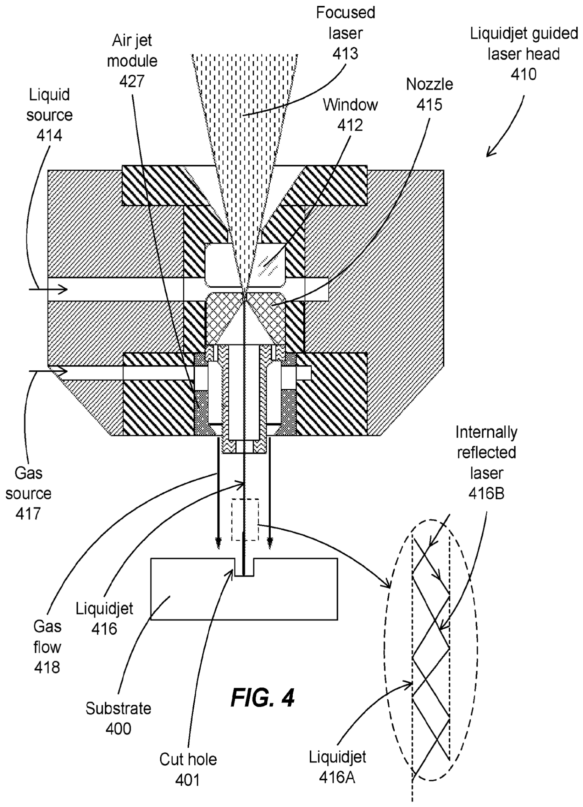

Fig. 4 illustrates a configuration of a liquid-jet guided laser head according to some embodiments. A liquid-jet guided laser head 410 can include a housing that holds a window 412. Below the window 412, there is a liquid-jet nozzle 415. A liquid source, such as a water source 414, can be pressed to a space between the window 412 and the nozzle 415 to form a laminar liquid jet 416A. In order to process material, a laser beam 413 from a laser power source is focused and guided through the window 412 and through the orifice of the liquid jet nozzle 415 into the laminar liquid jet 416. The focused laser beam 413 can be confined in a column of liquid 416A, which can guide the energy of the laser beam 416B by total internal reflection inside the column of liquid 416A towards the workpiece substrate 400. A liquid jet guided laser 416 can be applied to precisely machine micro holes or bores 401 in a substrate 400.

To mitigate possible water back spray disturbances while drilling small and deep holes or bores 401*, an air-jet module, such as the air jet module disclosed in patent U.S.10,307,864 can be used. Below the liquid jet nozzle 415, the liquid-jet guided laser passes through an inner conduit of an air jet module 427. A high-volume stream of compressed gas source 417 is provide through an outer and mechanically spaced apart conduit of the air jet module 427, which runs parallel to the liquid-jet guided laser 416 and towards the surface of the substrate 400. The stream of compressed gas 418 acts as a coaxial spaced apart shield that avoids back spray induced disturbances of the liquid-jet guided laser 416. Other fluids can be used instead of water to perform a liquid-jet guided laser process.

The liquid jet guided laser head 410 can be coupled to a motion mechanism to move the liquid jet guided laser head, for example, in a plane normal to the liquid jet 416, or in 3 dimensional movement parallel and normal to the liquid jet 416.

In some embodiments, the liquid-jet guided laser head can be used to form initial holes in a substrate. Typical liquid jet can have a diameter between 0.02 to 0.08 mm, thus a hole enlargement process can be used, such as running the liquid jet in a circular contour with the diameter of the circle equal to the dimension of the desired hole. Alternatively, the liquid jet can run a rastering pattern to form a hole having the dimension of the rastering area.

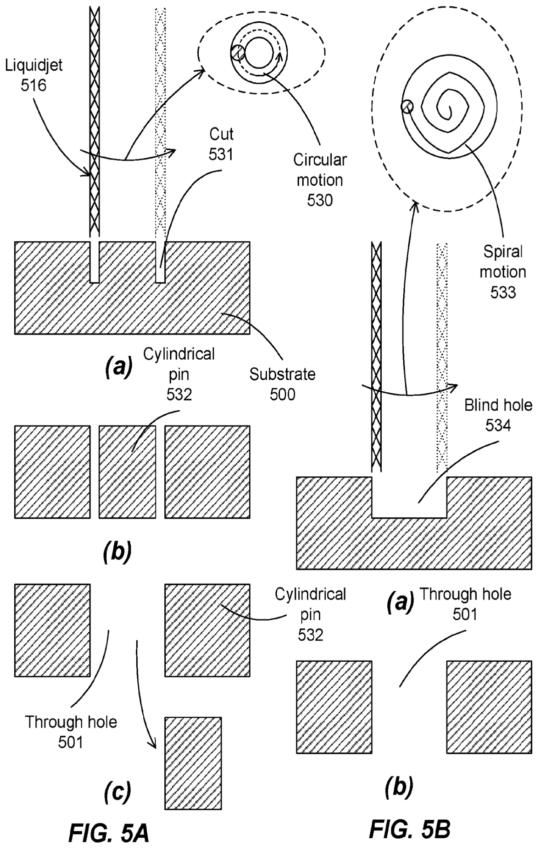

Fig. 5A - 5B illustrate a method for making holes in a substrate with a liquid-jet guided laser beam according to some embodiments. The liquid jet diameter in a liquid-jet guided laser head is normally smaller than typical hole diameters in gas distribution and uniformity plates, e.g., the liquid jet diameter is between 0.02 and 0.08mm as compared to the hole diameters of between 0.2 and 2 mm. In operation, the liquid jet 516 having an internally reflected laser beam within typically removes material by means of laser ablation, layer by layer, thus to make a hole having a depth, the liquid jet can continuously jetting into a same location on the substrate, or to make several passes along a same contour on the substrate.

To form a larger hole or bore 501 into a substrate 500, the liquid-jet guided laser 516 can either make a circular machining motion 530 to form cuts 531 and cut out a cylindrical pin 532, or the liquid-jet guided laser 516 can make spiraling motion 533, or a combination of a circular and spiraling machining motion to remove all material inside the diameter of a blind hole or bore 534. More passes for the spiraling motion 533 can form through hole 501 in the substrate 500.

The liquid-jet guided laser 516 can form holes or bores 501 into a substrate 500 which have a clean and sharp edge entrance and exit. The roughness average (Ra) of the side wall of a hole or bore 501 formed by a liquid-jet guided laser 516 can be lower than 10 micrometers, or between 0.25 and 3 micrometers, depending on the substrate material and energy parameter of the laser beam.

In some embodiments, the surface roughness of the sidewall of the holes can be dependent on the application of a gas distribution or uniformity plate. For high roughness requirements, the holes formed by the liquid-jet guided laser head can be adequate. For low roughness requirements, a finishing or smoothing process performed by a mechanical rotary tool can be used.

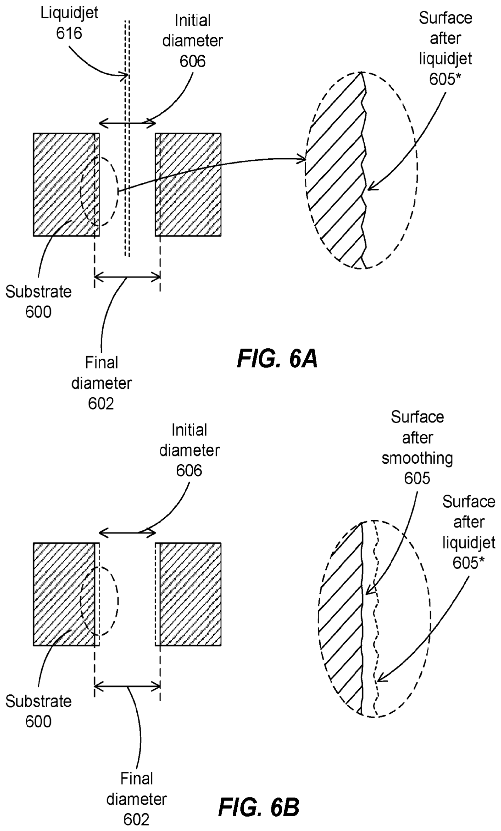

Figs. 6A - 6B illustrate a sidewall roughness of the holes according to some embodiments. A liquid jet 616 can be used for form a hole in a substrate 600. A typical hole diameter can be between 0.2 to 2 mm, such as between 0.2 to 1 mm, or 0.4 to 0.8 mm. Since the diameter of the liquid jet 616 is much smaller, a circular pattern or a rastering pattern can be used by the liquid jet to enlarge the diameter 606 of the hole. The sidewall of the hole can have a roughness 605* after the liquid jet process. The liquid jet can cut the substrate with a sidewall roughness value depending on the substrate material, the energy parameter of the laser beam, and the processing time of the cutting process. For example, a slower cutting process can provide a smoother sidewall, e.g., having a lower roughness value, but at the expense of a lower throughput. In some embodiments, the hole formation process can achieve a high throughput by using a high surface roughness process of the liquid jet, followed by a subsequent smoothing process by a mechanical rotary tool to meet the roughness requirements. The mechanical rotary tool can smooth the initial sidewall surface 605* hole into a final sidewall roughness 605, together with enlarging an initial hole diameter 606 into a final hole diameter 602. For example, the mechanical rotary tool can smooth the sidewall to a roughness average Ra of less than a few micrometers, such as less than 1 micrometer, less than 0.5 micrometer, or less than 0.1 micrometers.

In some embodiments, the surface roughness can be characterized by a roughness average value Ra, which is the arithmetic average value of filtered roughness profile determined from deviations about the center line within the evaluation length. In practice, Ra can be determined by taking the average of a set of individual measurements of a surfaces peaks and valleys.

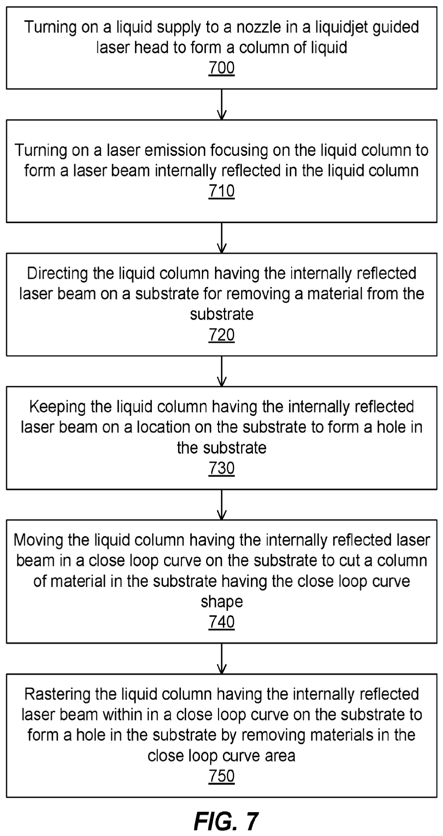

Fig. 7 illustrates a flow chart for forming an initial hole in a substrate according to some embodiments. A liquid-jet having an internally reflected laser beam can be used to form holes in a substrate. A nozzle of a liquid-jet guided laser head can be used to form the liquid jet. The nozzle can also be aligned to the laser beam to obtain the internally reflected laser beam. Operation 700 turns on a liquid supply to a nozzle in a liquid jet guided laser head to form a column of liquid. Operation 710 turns on a laser power source focusing on the liquid column to form a laser beam internally reflected in the liquid column. Operation 720 directs the liquid column having the internally reflected laser beam on a substrate for removing a material from the substrate. Operation 730 keeps the liquid column having the internally reflected laser beam on a location on the substrate to form a hole in the substrate. Operation 740 moves the liquid column having the internally reflected laser beam in a close loop contour on the substrate to cut a column of material in the substrate having the close loop contour shape. Operation 750 rasters the liquid column having the internally reflected laser beam within in a close loop contour on the substrate to form a hole in the substrate by removing materials in the close loop contour area.

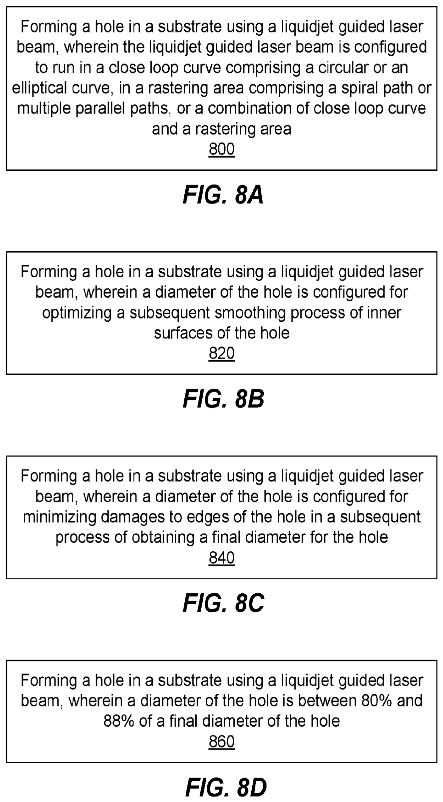

Figs. 8A - 8D illustrate flow charts for forming initial holes in a substrate according to some embodiments. The holes can be formed with a liquid jet having an internally reflected laser beam, making a close loop contour or making a rastering pattern. The hole can be slightly smaller than a final desired dimension, which is configured to be smoothed by a subsequent process using a mechanical rotary tool, such as a drill, a reamer, a milling tool, or a honing tool.

In Fig. 8A, operation 800 forms a hole in a substrate using a liquid jet guided laser beam, with the liquid jet guided laser beam configured to run in a close loop contour such as a circular or an elliptical contour, in a rastering area comprising a spiral path or multiple parallel paths, or a combination of close loop contour and a rastering area.

In Fig. 8B, operation 820 forms a hole in a substrate using a liquid jet guided laser beam, with a diameter of the hole configured for optimizing a subsequent smoothing process of inner surfaces of the hole.

In Fig. 8C, operation 840 forms a hole in a substrate using a liquid jet guided laser beam, with a diameter of the hole configured for minimizing damages to edges of the hole in a subsequent process of obtaining a final diameter for the hole.

In Fig. 8D, operation 860 forms a hole in a substrate using a liquid jet guided laser beam, with a dimension of the hole, such as a diameter, between 75% and 99%, or between 80 and 90% of a final diameter of the hole.

In some embodiments, the liquid jet can be configured to form through holes or blind holes, with the dimension of the holes, e.g., the diameter of the holes, configured to optimized for high throughput while satisfying the requirements of the hole formation, such as a sidewall roughness value and no edge damages at the hole entrance and exit. For example, the diameter of round holes can be greater than 75%, greater than 80%, greater than 85%, or greater than 90%, such as between 75 and 99% of a final desired diameter, or between 80 and 99% of a final desired diameter, or between 90 and 99% of a final desired diameter

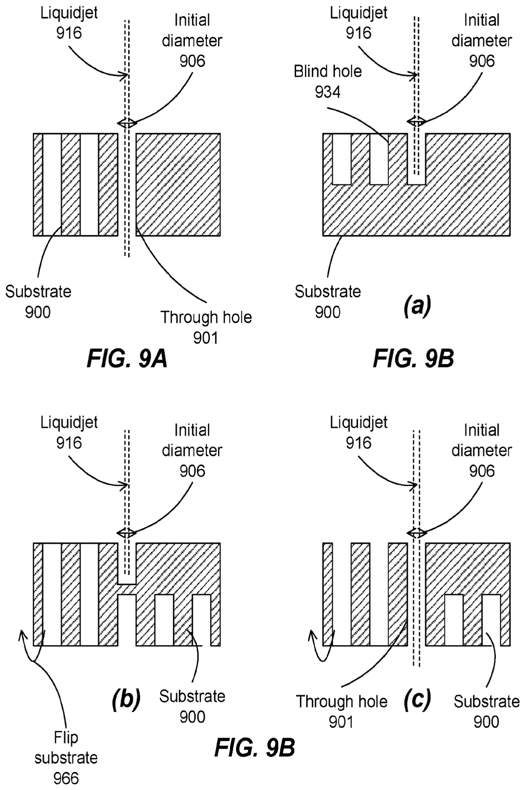

Figs. 9A - 9B illustrate configurations of holes formed by a liquid jet according to some embodiments. An initial hole 901 can be formed in a substrate 900 using a liquid jet guided laser 916, e.g., a liquid jet having an internally reflected laser beam. The initial hole can be configured to be finished by a subsequent smoothing process, such as a mechanical rotary process. For example, the process of forming the initial hole in a substrate is optimized for achieving a high throughput to enable making hundreds or thousands of holes in the substrate in an efficient manner.

Fig. 9A shows a process in which the initial holes 901 are formed by a liquid jet 916 removing substrate material from one side of the substrate 900. For example, the liquid jet 916 can move repeatedly in multiple passes along a circular contour having a diameter 906 of the initial hole. The process continues until the initial hole fluidly connects both sides of the substrate. One or more sensors can be disposed, from one side or from both sides of the substrate, e.g., the substrate side opposite to the liquid jet guided laser head, to detect the completion of the through hole. After observing the sensor detection signal, the liquid jet can continue for a few more passes along the circular contour to ensure a complete penetration of the liquid jet through the substrate.

After forming an initial hole, the liquid jet can move to other locations on the substrate to form subsequent holes.

Figs. 9B(a) - 9B(c) show another process for forming through holes 901 in a substrate 900. Because in a liquid-jet guided laser process the process speed generally decreases with increased working depth, it can be desired to process a workpiece from 2 opposite sides instead of from one single side. Drilling a hole though 12mm of material can for example take more than 180s or more then 240s to complete. A preferred way can be to drill a blind hole of 6mm depth first, then flip the workpiece 180° and drill at the opposite side of the blind hole and fluidly connect into it. The overall processing time can then be less than 90s or less then 60s.

Fig. 9B(a) shows a first step in which the liquid-jet guided laser 916 is applied to rapidly machine at least one blind hole 934 into a first surface of the substrate 900. The liquid jet 916 can move repeatedly in multiple passes in a rastering pattern within a circular contour having a diameter 906 of the initial blind hole 934. The depth of the blind hole 934 can be greater than 30% and less than 70% of the substrate 900 thickness, such as between 40% and 60% of the substrate 900 thickness. After forming an initial blind hole, the liquid jet can move to other locations on the substrate to form subsequent blind holes. As shown, the liquid jet has completed the formation of 2 blind holes on the left side, and in the process of forming the third blind hole. The liquid jet then can move to right to form subsequent blind holes.

Fig. 9B(b) shows a second step in which the substrate is turned around so that a second surface opposite the first surface of the substrate 900 faces the liquid-jet guided laser head. The already made blind portion of the blind hole 934 from the first step is aligned so that the center axis of the blind hole 934 and the axis of the liquid-jet guided laser 916 are the same, for example, using an alignment module. The liquid-jet guided laser 916 is then applied, e.g., the laser source is turned on to generate the internally reflected laser beam within the liquid jet, to rapidly machine a remaining portion of the blind hole 934 and remove all the remaining substrate material. As shown, the liquid jet has completed the formation of 2 through holes on the left side by making other portions on the opposite side that are fluidly connected to the existing blind holes. The liquid jet is in the process of forming the third blind hole, which is configured to be fluidly connected to the blind hole on the opposite side.

Fig. 9B(c) shows a through hole 901 is created that fluidly connects a first surface and a second surface of the substrate 900 after the liquid jet completely removing the material in the through hole in the substrate. One or more sensors can be used to detect the completion of the formation of the through hole 901. The liquid jet then can move to right to form subsequent holes to be connected with the existing blind holes on the opposite side.

In some embodiments, the liquid jet can be used to form a blind hole, e.g., a hole that does not connect two opposite surfaces of the substrate. The liquid jet can be used to form two opposite blind holes, e.g., two opposite holes that are not connected to each other.

The diameter of the initial hole 901 can be configured to optimized a throughput of the final hole formation. For example, for a high throughput liquid jet process, e.g., using high laser power, the initial hole can be as large as possible to minimize the processing time of the mechanical rotary tool. Thus, the mechanical rotary tool can be applied to rapidly finish the core hole 901 to a desired final bore diameter. As all the heavy lifting in terms of material removal has been done already by the liquid-jet guided laser 916, the mechanical tool only needs to remove a small portion of material. For example, the initial through hole diameter, for example, can be 0.40 mm for a final hole diameter of 0.45 mm so that a mechanical tool only needs to remove the substrate material between 0.40 and 0.45 mm.

For improved throughput with slow mechanical tool processes, two mechanical tools can be applied for simultaneous finishing of an initial hole 901 to a final hole diameter. For example, a first mechanical tool can be placed above a first surface of a substrate. A second mechanical tool can be placed below a second surface of a substrate. The center axis of both mechanical tools is the same. Both mechanical tools can be kept with a constant spacing to each other along their center axis. Either the substrate can move along the axis of both mechanical tools in an oscillating up-down movement, or alternatively both mechanical tools can move along the center axis of the core hole simultaneously in an oscillating up-down movement.

As a mechanical tool typically has a certain material removal rate based on its rotations per minute and the feed speed in a direction perpendicular to the substrate, two mechanical tools can remove more material in a shorter time. The oscillating up-down movement can be required to remove substrate material from the bore. Alternatively, the first mechanical tool and the second mechanical tool can also move along the center axis of a core hole 1217 independently from each other as desired for an efficient removal process as long as their movements don't collide on the center axis of a hole.

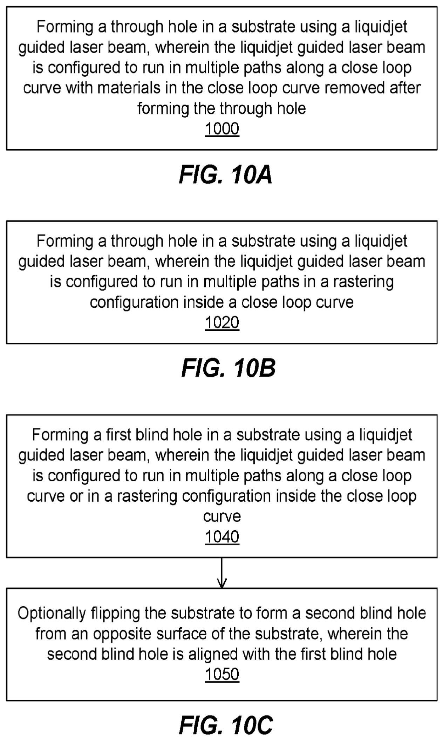

Figs. 10A - 10C illustrate flow charts for forming initial holes in a substrate according to some embodiments. In Fig. 10A, operation 1000 forms a through hole in a substrate using a liquid jet guided laser beam, with the liquid jet guided laser beam configured to run in multiple passes along a close loop contour with materials in the close loop contour removed after forming the through hole.

In Fig. 10B, operation 1020 forms a through hole in a substrate using a liquid jet guided laser beam, with the liquid jet guided laser beam configured to run in multiple passes in a rastering configuration inside a close loop contour.

In Fig. 10C, operation 1040 forms a first blind hole in a substrate using a liquid jet guided laser beam, with the liquid jet guided laser beam configured to run in multiple passes along a close loop contour or in a rastering configuration inside the close loop contour. Operation 1050 optionally flips the substrate to form a second blind hole from an opposite surface of the substrate, with the second blind hole aligned with the first blind hole. The second blind hole can connect to the first blind hole to form a through hole through the substrate.

In some embodiments, the substrate can be heated to improve the throughput of the liquid jet process. Since the liquid jet process is a laser ablation process, e.g., material removing by a laser power, a high temperature substrate can speed up the laser ablation process. In addition, the liquid jet process can have a rapidly cooled substrate due to the liquid flow. Thus, for moving liquid jet to cut material, for example, in a circular contour, the substrate can be significantly cooled before the liquid jet returns

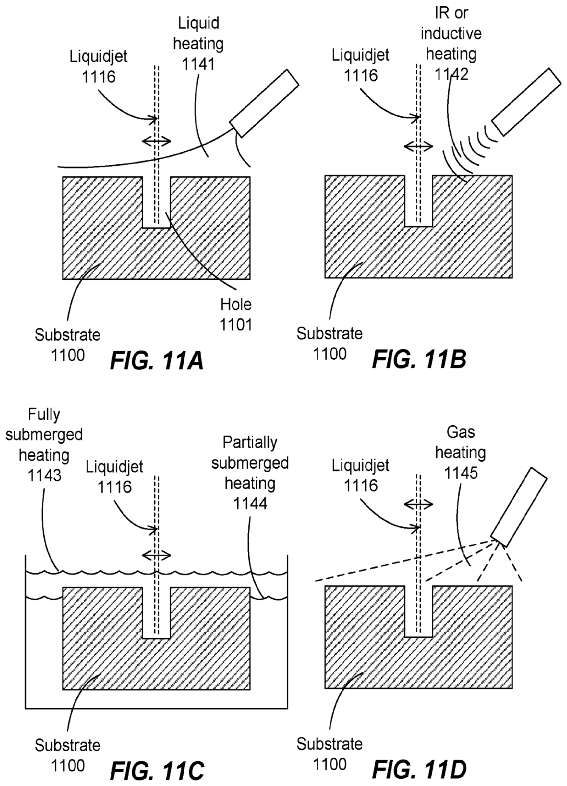

Figs. 11A - 11D illustrate configurations for heating a substrate for speeding up a liquid-jet guided laser hole forming process according to some embodiments. A liquid-jet guided laser 1116 can be applied to make a hole 1101 into a substrate 1100. When the substrate is thin, such as less than a few millimeters, the liquid-jet guided laser 1116 can cut the hole in a few passes, such as less then 15 passes or less than 10 passes. When the substrate is very thick, such as for example more than 5mm of more than 10mm or more than 15mm, significantly more passes are required, such as more than 50 passes or more than 100 passes.

If the hole 1101 has a larger shape, e.g., a large close loop contour that the liquid jet runs along to make the cut, such as an elongated hole of several centimeters, it can take several seconds before the liquid-jet guided laser 1116 can complete one circumferential pass of the hole 1101. Due to the high speed of the liquid-jet, the strong cooling effect of the process water as well as the cooling effect of a coaxial stream of compressed gas, the substrate 1100 can cool down rapidly after the laser has passed.

The invention recognizes that a small hole circumference 1101 of a certain depth can be cut with a low amount of liquid-jet guided laser passes. A larger hole circumference, such as 10x larger for the same depth, can require a double or triple the amount of liquid jet passes, because it takes much longer before the liquid-jet guided laser 1112 reaches the same spot on the circumference of the hole 1101 again.

In some embodiments, the substrate area that is being machined by a liquid-jet guided laser 1116 can therefore be heated up by an auxiliary heating device to mitigate a cool down effect on the machining time and amount of liquid-jet guided laser passes.

Fig. 11A shows a water flooding nozzle 1141 which floods the work piece, e.g., the substrate 1100, with hot water. The hot water flow 1141 can accelerate the hole machining process using the liquid jet. During the machining process with a liquid-jet guided laser 1116, the substrate 1100 can be heated up and kept warm up by a liquid heating flow, such as a water flooding nozzle 1141. The water can have a temperature of more than 40° Celsius, such as a temperature of more than 50° Celsius. The water can have a temperature less than 100° Celsius, such as less than 90° Celsius. In some embodiments, other liquids with higher vaporization temperatures can be used, to heat the substrate to a higher than 100 °Celsius. It can also be desired to heat the rear side of the substrate instead of the top side of the substrate. The water flooding nozzle is then mounted below the substrate.

Fig. 11B shows an infrared and/or inductive device 1142 which heats up and keeps warm the substrate 1100 at the area of machining to accelerate a hole machining process. The substrate can reach a temperature of more than 50° Celsius, such as more than 60° Celsius. The substrate can reach a temperature of less than 150° Celsius, such as less than 110° Celsius. It can also be desired to heat the rear side of the substrate instead of the top side of the substrate. The infrared and/or inductive device is then mounted below the substrate.

Fig. 11C shows a configuration for heating up and keeping warm a substrate during a liquid-jet guided laser process. The substrate 1100 can be completely 1143 or partially 1144 submerged in a submerging fluid. Such submerging fluid can, for example, be a water or an ethanol. The submerging fluid can have a temperature of more than 40° Celsius, such as more than 50° Celsius. The submerging fluid can have a temperature less than an evaporation temperature of the submerging fluid, such as less than 100° Celsius or less than 110° Celsius for water.

Fig. 11D shows a configuration for heating up and keeping warm a substrate during a liquid-jet guided laser process. The substrate 1100 can receive a gas heating flow, e.g., an air temporizing device 1145, such as, for example, a hot air gun that is pointed towards the area of the substrate 1100 that is being machined. The air temporizing device 1145 can heat up the substrate 1100 to a temperature of more than 40° Celsius, such as more than 50° Celsius. The substrate temperature can be less than 110° Celsius.

Other temperatures can be achieved by the substrate to improve the liquid jet cutting process, such as higher than 110° Celsius, such as less than 200° Celsius. In some embodiments, the rear side of the substrate can be heated, instead of, or in addition to, the top side of the substrate. The gas heating flow is then provided from below the substrate, instead of, or in addition to, from the top of the substrate.

In some embodiments, a substrate cooling process can be applied to the substrate, for example, for some very delicate substrate materials that are prone to heat induced damage. For example, the liquid heating nozzle 1141, the submerging fluid, and the gas flowing nozzle 1145 can be configured to provide cool or cold liquid or gas. For example, the cooling temperature can be less than 60° Celsius, such as less than 40° Celsius, and can be more than -10° Celsius.

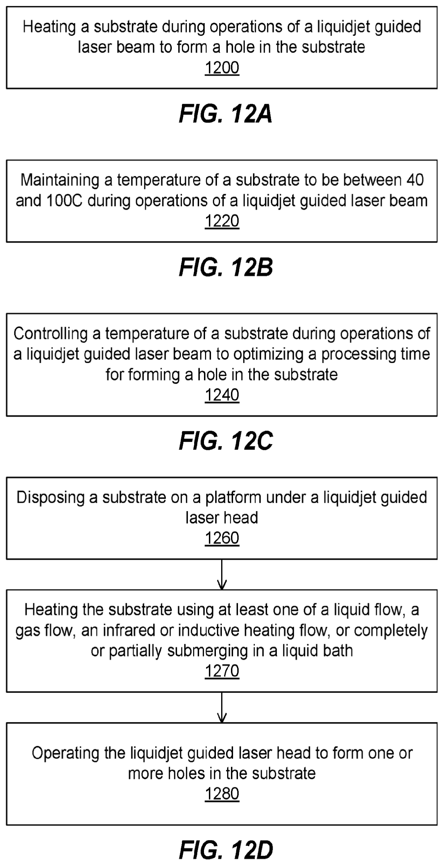

Figs. 12A - 12D illustrate flow charts for conditioning a substrate temperature during a liquid jet process according to some embodiments. In Fig. 12A, operation 1200 heats a substrate during operations of a liquid jet guided laser beam to form a hole in the substrate.

In Fig. 12B, operation 1220 maintains a temperature of a substrate to be between 40 and 100C during operations of a liquid jet guided laser beam.

In Fig. 12C, operation 1240 controls a temperature of a substrate during operations of a liquid jet guided laser beam to optimizing a processing time for forming a hole in the substrate.

In Fig. 12D, operation 1260 disposes a substrate on a platform under a liquid jet guided laser head. Operation 1270 heats the substrate using at least one of a liquid flow, a gas flow, an infrared or inductive heating flow, or completely or partially submerging in a liquid bath. Operation 1280 operates the liquid jet guided laser head to form one or more holes in the substrate.

In some embodiments, sensors can be added to detect the progress of the liquid jet, and in particular, to determine the end point of the liquid jet process. A sensor can be positioned at an opposite side of the liquid jet head, e.g., having the substrate disposed between the liquid jet and the sensor.

A light or optical sensor can be used to detect the presence of the liquid jet at the bottom side of the substrate when the liquid jet is placed at a top side of the substrate. When the light sensor detects the presence of the liquid jet or the presence of the laser beam, the signal from the light sensor can indicate that the liquid jet has penetrated through the substrate. Additional few passes of the liquid jet can be performed after the detection signal to ensure the completeness of the cut through the substrate.

An acoustic or sound sensor can be used to detect the presence of the liquid jet at the bottom side of the substrate when the liquid jet is placed at a top side of the substrate. The sensor can be disposed in a vicinity of the substrate, such as on the side or at the top of the substrate. When the liquid jet emerges from the substrate, e.g., when the liquid jet has penetrated through the substrate, the acoustic or sensor can detect a different sound or tone as compared to when the liquid jet still cutting through the substrate. The tone of the liquid jet can be different when the liquid jet starts, e.g., not cutting the substrate, when the liquid jet cuts the substrate, and when the liquid jet finishes cutting. Thus, by monitoring the tone of the sound emitted by the liquid jet interacting with the substrate, progress of the liquid jet can be monitored.

Other sensors or a combination of sensors, such as a combination of light and sound sensors, can be used.

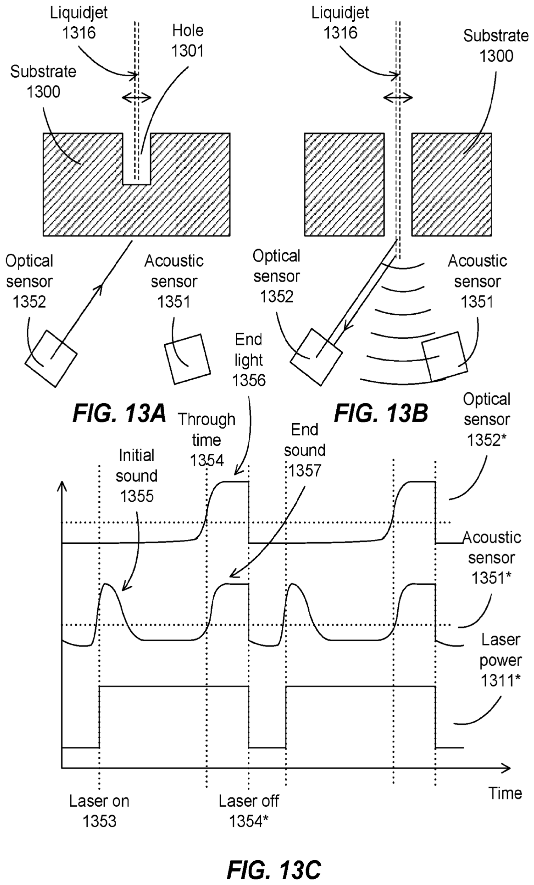

Figs. 13A - 13C illustrate sensor configurations for a liquid-jet guided laser process to detect end points of the liquid jet process according to some embodiments. When forming a hole 1301 into a substrate 1300 with a liquid-jet guided laser 1316, a certain material removal rate applied based on the substrate material as well as the process parameters, such as liquid-jet nozzle diameter, liquid-jet pressure, laser power, laser pulse length, laser frequency, feed speed and pressure of a compressed shielding gas. A liquid-jet guided laser system is typically capable of drilling hundreds or thousands of holes with the same cutting speed. Thus, the speed of the liquid jet cutting through the substrate can be determined from experimental data.

There are however factors that influence the achievable cutting speed and the time required to cut through a hole fluidly from a top surface of a substrate to a bottom surface of a substrate. For example, there can be inhomogeneity in the substrate material, which can cause some areas to cut through quicker or slower. Also, inside the liquid-jet guided laser head there are certain components that can wear over time, such as a laser window through which the laser light must pass before it is coupled into the liquid-jet nozzle. After a certain number of working hours such laser window is therefore replaced. To speed up an overall hole drilling or protrusion cutting process and also to detect wear of consumable components, sensors that detect a cut through point can be applied.

A cut through optical sensor 1352 can be placed in the vicinity of the substrate 1300. Alternatively or additionally, a cut through acoustic sensor 1351 can be placed in the vicinity of the substrate 1300. In some embodiments both cut through optical sensor 1352 and cut through acoustic sensor 1351 are place next to or underneath a substrate 1300 into which at least one hole 1301 is machined by a liquid-jet guided laser 1316. When the drilling process starts and the laser beam from a liquid-jet guided laser 1316 is switched on, a strong plasma induced cutting sound can be created. Such plasma induced sound is typically in the same tonal frequency as the frequency of the laser beam. Such plasma induced sound can reduce or even disappear with increasing penetration depth of the liquid-jet guided laser 1312 into the substrate 1300. Upon cut through there can be an abrupt increase of an emitted sound level by the liquid-jet guided laser 1316 that rapidly exits the lower part of the hole 1301. In those portions where the hole 1301 is not yet cut through, the emitted sound can disappear again. For example upon initial cut through by the liquid-jet guided laser 1316 only one quarter of the hole 1301 circumference is cut through while three quarters of the bore 1301 circumference are not yet cut through within the same laser pass. For such cut through portion an emitted sound can be detectable by a cut through acoustic sensor 1351. For the not yet cut through portions of the hole 1301 circumference the cut through acoustic sensor 1351 can detect a much lower or no emitted sound at all.

When the drilling process starts and the laser beam from a liquid-jet guided laser 1316 is switched on, the majority of laser energy is guided by the liquid-jet guided laser 1316 by total internal reflection inside the liquid-jet toward the substrate 1300 and into the cutting area of the hole 1301. A cut through optical sensor 1352 can be placed at an opposite site of the substrate 1300. In other words, the substrate 1300 is located between the liquid-jet guided laser head and the cut through optical sensor 1352. When the drilling process starts, the cut through optical sensor 1352 can detect a low intensity of emitted laser light or no emitted laser light at all. Upon cut through there can be an abrupt increase of an emitted laser light level by the liquid-jet guided laser 1316 that exits the lower part of the hole 1301. In those portions where the hole 1301 is not yet cut through, the emitted laser light can disappear again. For example, upon initial cut through by the liquid-jet guided laser 1316 only one quarter of the hole 1301 circumference is cut through while three quarters of the hole 1301 circumference are not yet cut through within the same laser pass. For such cut through portion an emitted laser light can be detectable by a cut through optical sensor 1352. For the not yet cut through portions of the hole 1301 circumference the cut through optical sensor 1352 can detect a much lower or no emitted laser light at all.

In some embodiments, inside the liquid-jet guided laser head, a light from a light source which is not generated by the laser itself is coupled into the liquid-jet guided laser 1316. Such secondary light source can be an LED that emits a specific wavelength. A cut through optical sensor 1352 can be fitted with at least one optical filter that can block a laser wavelength and pass an LED wavelength or vice versa. Upon cut through there can be an abrupt increase of LED light level, being guided by the liquid-jet guided laser 1316 that exits the lower part of the hole 1301. In those portions where the hole 1301 is not yet cut through, the LED light level can disappear again. For example, upon initial cut through by the liquid-jet guided laser 1316 only one quarter of the hole 1301 circumference is cut through while three quarters of the hole 1301 circumference are not yet cut through within the same laser pass. For such cut through portion an LED light level can be detectable by a cut through optical sensor 1352. For the not yet cut through portions of the hole 1301 circumference the cut through optical sensor 1352 can detect a much lower or no LED light at all.

Fig. 13C shows the amplitude behavior of a cut through optical sensor, a cut through acoustic sensor and emitted laser light. One of a cut through optical sensor 1352 or one of a cut through acoustic sensor 1351 can be applied to precisely determine the moment that a liquid-jet guided laser 1316 cuts through a substrate 1300. In addition to the moment of cut through also a circumferentially completely cut hole can be detected. In such case an emitted laser light intensity 1352* detected by a cut through optical sensor 1352 is always in a high state during the entire machining pass of the liquid-jet guided laser 1316 on the circumference of the hole 1301, or an emitted sound intensity 1351*detected by a cut through acoustic sensor 1351 is always in a high state during the entire machining pass of the liquid-jet guided laser 1316 on the circumference of the hole 1301. In some embodiments, the cut through point of a hole 1301 made with a liquid-jet guided laser 1316 is detected by a combination of a cut through optical sensor 1352 and a cut through acoustic sensor 1351. An emitted laser light intensity 1352* and an emitted sound intensity 1351* can be monitored in relation to a laser ON/OFF pattern 1311*.

Before machining a hole 1301 into a substrate 1300, the laser emission of the liquid-jet guided laser head is OFF. In general, the laser emission and the water source forming the liquid column can be independently controlled. For example, the water can be running when the laser emission is off. When the hole 1301 making process is started, the laser emission is turned on and guided through the liquid-jet onto the substrate 1300. At a laser ON moment 1353 a detected emitted laser light intensity 1352* can be below a signal threshold because no laser light can be picked up by a cut through optical sensor 1352 as the not yet cut through substrate 1300 forms an optical barrier. At a laser ON moment 1353 a detected emitted sound intensity 1355 can above a signal threshold because a cut through acoustic sensor 1351 can detect sound being emitted by the cutting plasma. The emitted sound intensity 1353 can however rapidly decrease below a signal threshold once the liquid-jet guided laser 1316 progresses deeper into the substrate 1300.

At a laser cut through moment 1354 both an emitted laser light intensity 1356 and an emitted sound intensity 1357 can rapidly increase and exceed a signal threshold. The liquid-jet guided laser can remain in an ON-state and machining until an emitted laser light intensity 1356 and an emitted sound intensity 1357 remain above a signal threshold during the entire circumference of the hole 1301. Then the laser can be switched to an OFF-state and at a laser OFF moment 1354*, both an emitted laser light intensity 1356 and an emitted sound intensity 1357 can abruptly decrease below a signal threshold again. Monitoring both an emitted laser light intensity 1352* and an emitted sound intensity 1351* can provide a safe method to detect the complete cut through of a hole 1301 in a large variety of substrates and substrate 1300 materials as well as different bore geometries such as round holes, square holes, elliptical holes, elongated holes, conical holes, narrow high-aspect lines and other freeform shapes.

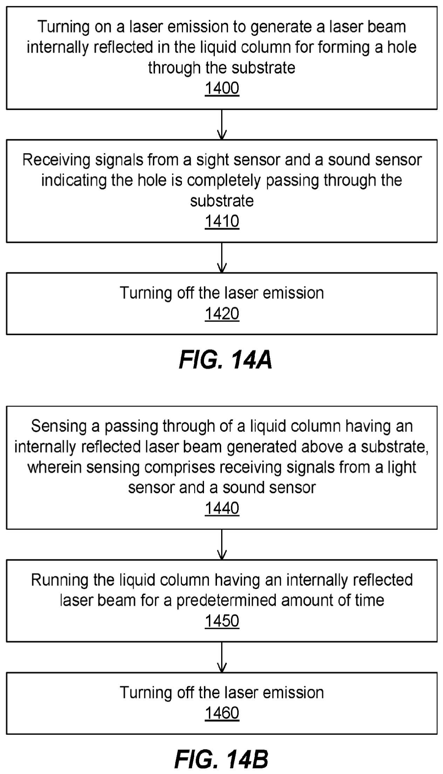

Figs. 14A - 14B illustrate flow charts for detecting end points of the liquid jet process according to some embodiments. In Fig. 14A, operation 1400 turns on the laser emission to generate a laser beam internally reflected in the liquid column for forming a hole through the substrate. Operation 1410 receives signals from at least one of an optical sensor or an acoustic sensor indicating the hole is completely passing through the substrate. Operation 1420 turns off the laser emission.

In Fig. 14B, operation 1440 senses a passing through of a liquid column having an internally reflected laser beam generated above a substrate, with sensing including receiving signals from a light sensor and an acoustic sensor. Operation 1450 runs the liquid column having an internally reflected laser beam for a predetermined amount of time. Operation 1460 turns off the laser emission.

In some embodiments, an electric discharge machining (EDM) process can be used in the formation of the initial hole in the substrate. For example, the EDM process can be used to enlarge an initial hole formed by a liquid jet. Alternatively, the EDM process can be used to form the initial hole, without the liquid jet.

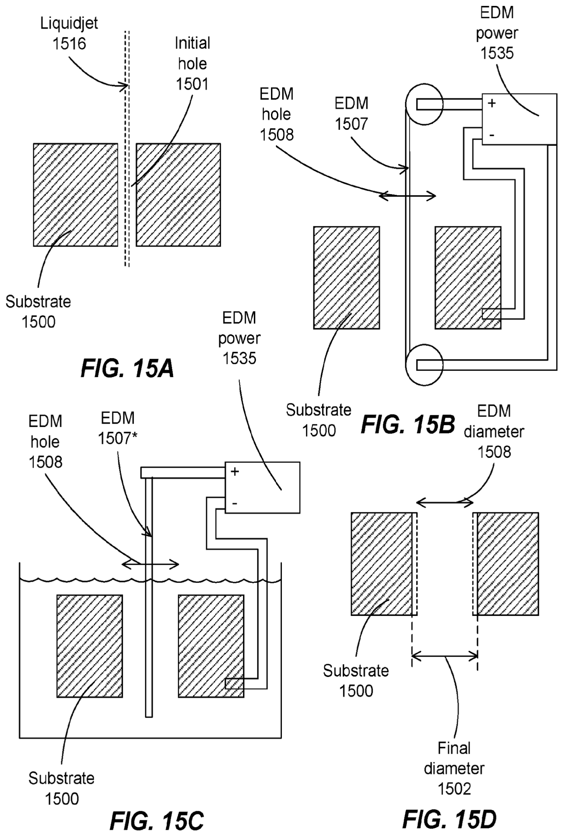

Figs. 15A - 15D illustrate a process for forming an initial hole using a liquid jet and an electric discharge machining according to some embodiments. Fig. 15A shows a formation of an initial hole 1501 in a substrate 1500 using a liquid jet 1516. The diameter of the initial hole 1501 can be configured to accept an EDM electrode, such as a wire 1507 connecting two terminal of an EDM power source 1535.

Fig. 15B shows a hole enlarging processing using a wire EDM process. After the hole is enlarged, for example, to a dimension slightly smaller than a final diameter, a mechanical rotary tool can be used to finish the enlarged hole, such as to smooth the surface of the enlarged hole. The mechanical rotary tool can provide a much lower roughness value, as compared to the EDM process.

The EDM process can be a wire based EDM process in which a thin wire is applied to erode the material inside the diameter of the hole 1501. In such case the EDM electrode diameter 1508 is much smaller than the core hole diameter 1501 and can either make a circular machining motion and cut out a cylindrical pin, or the EDM process can make spiraling, or a combination of a circular and spiraling machining motion to remove all material inside the diameter of a hole 1501.

For example, a roller wire can pass through the hole formed by the liquid jet, and connected to a terminal of the EDM power source. The substrate 1500 can be connected to a second terminal of the EDM power source. When the EDM power source is turned on, the substrate material can be removed, for example, by a discharge process from the wire EDM to the substrate. The wire can be moved in a close loop contour, such as a circular contour to enlarge the initial hole to a desired dimension

Fig. 15C shows a hole enlargement process using a sinking electrode based EDM process in which a hole shaped electrode is applied to erode the material inside the diameter of the hole 1501. After the hole is enlarged, for example, to a dimension slightly smaller than a final diameter, a mechanical rotary tool can be used to finish the enlarged hole, such as to smooth the surface of the enlarged hole. The EDM electrode can be coupled at one end to the EDM power source. In such case the EDM electrode 1507* can be only slightly smaller than the initial hole formed by the liquid jet.

Fig. 15D shows a configuration of a hole formed by an EDM process for enlarging an initial hole formed by the liquid jet. The EDM hole can have a diameter 1508 slightly smaller than a final diameter 1502. The EDM hole can be subjected to a mechanical tool to finish the hole to a desired final hole having the final diameter 1502 having a desired quality and roughness value.

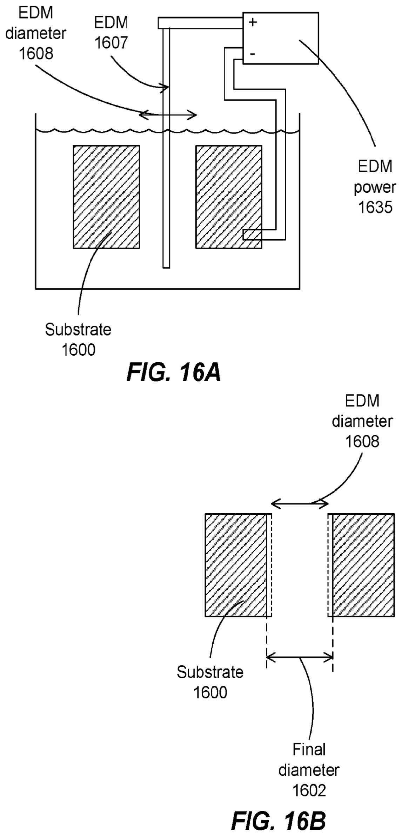

Figs. 16A - 16B illustrate a process for forming an initial hole using an electric discharge machining according to some embodiments. In Fig. 16A, the EDM process can be a sinking electrode based EDM process in which an electrode 1607 is applied to the substrate to erode the material in the substrate. The electrode is connected to a terminal of an EDM power source 1635. The substrate is connected to another terminal of the EDM power source.

Fig. 16B shows a configuration of an initial hole formed by an EDM process. The EDM hole can have a diameter 1608 slightly smaller than a final diameter 1602. The EDM hole can be subjected to a mechanical tool to finish the hole to a desired final hole having the final diameter 1602 having a desired quality and roughness value.

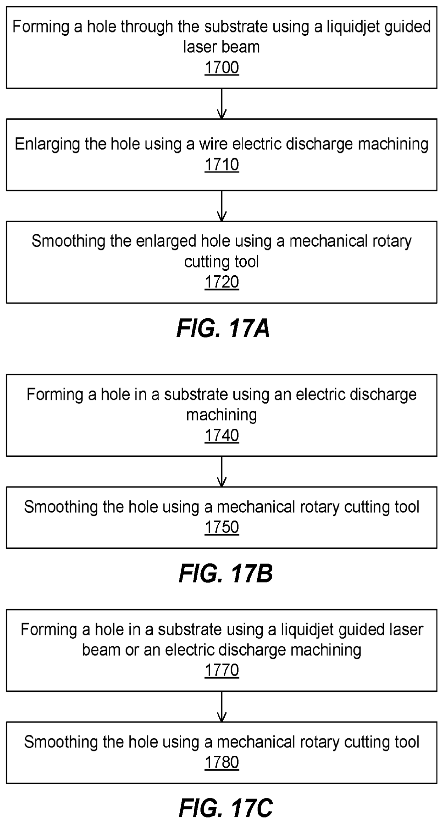

Figs. 17A - 17C illustrate flow charts for forming holes with an EDM process according to some embodiments. In Fig. 17A, operation 1700 forms a hole through the substrate using a liquid jet guided laser beam. Operation 1710 enlarges the hole using a wire electric discharge machining. Operation 1720 smoothens the enlarged hole using a mechanical rotary tool.

In Fig. 17B, operation 1740 forms a hole in a substrate using an electric discharge machining. Operation 1750 smoothens the hole using a mechanical rotary tool.

In Fig. 17C, operation 1770 forms a hole in a substrate using a liquid jet guided laser beam or an electric discharge machining. Operation 1780 smoothens the hole using a mechanical rotary tool.

In some embodiments, the liquid jet can move from locations to locations on the substrate to form multiple initial holes, before transferring the substrate to a mechanical rotary tool head for finishing the holes. The movements of the liquid jet can be performed by a motion mechanism, such as a xy or a xyz motion table, for moving a liquid jet guided laser head, from which the liquid jet is generated.

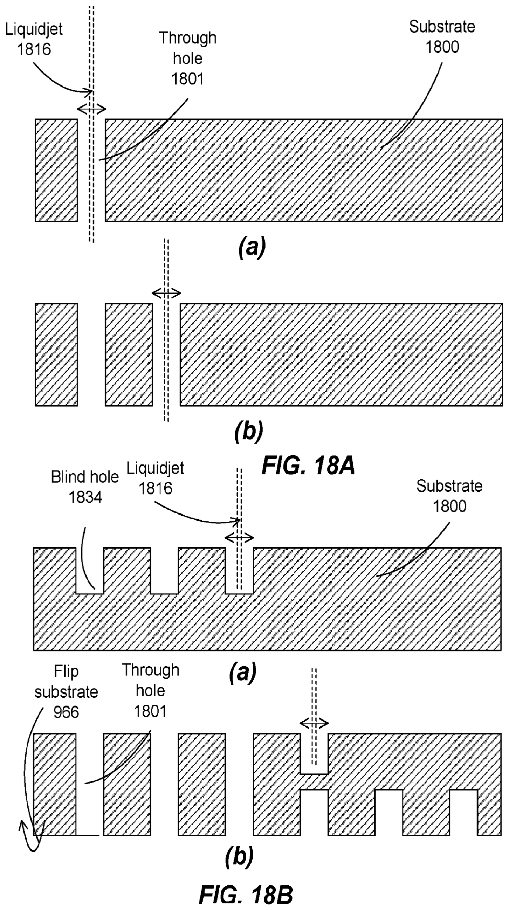

Figs. 18A - 18B illustrate configurations for forming multiple holes in a substrate using a liquid jet according to some embodiments. Figs. 18A(a) and 18A(b) show a configuration in which a liquid jet is used to form through holes in a substrate from one side of the substrate. Figs. 18B(a) and 18B(b) show a configuration in which a liquid jet is used to form blind holes in a substrate from one side of the substrate, followed by a substrate flipping, before complete the blind holes into through holes from the opposite side of the substrate.

In Fig. 18A(a), a liquid jet 1816, e.g., a liquid jet having an internally reflected laser beam confined within the boundary of the liquid jet, and generated from a liquid jet guided laser head, can be used to form a through hole 1801 in a substrate 1800. The liquid jet can make multiple passes along a close loop contour, such as along a circular contour, to cut a cylinder having the diameter similar to the diameter of the desired hole. Alternatively, the liquid jet can raster within the circular contour, such as making a spiral path or multiple parallel lines, to remove material from the hole, instead of making a cylinder. In Fig. 18A(b), the liquid jet moves to another location on the substrate to form a subsequent through hole.

The through holes in the substrate can be initial holes, e.g., the through holes are subsequently finished by a subsequent mechanical rotary tool, for example, to smooth the wall of the holes.

In some embodiments, the initial hole can be formed by a combination of the liquid jet and an EDM process. For example, the liquid jet can form one or more initial holes having a diameter suitable for the EDM electrode. For example, using a sinking electrode based EDM process, the initial holes formed by the liquid jet can be slightly larger than the sinking electrode size. If a wire electrode based EDM process is used, the initial holes can be larger, such as large enough for the wire to pass through. Alternatively, the holes can be formed by an EDM process, without the initial hole. For example, a sinking electrode can be placed near the substrate, and the EDM power is turned on to remove the material from the electrode to form a hole.

In any case, the initial holes, formed by the liquid jet, by a combination of the liquid jet and an EDM electrode, or by an EDM electrode, can have a size suitable for a subsequent finishing process, using a mechanical rotary tool.

In some embodiments, the liquid jet can form all the through holes in the substrate. The substrate then can move to an EDM system, which can be configured to continue processing the through holes formed by the liquid jet. After finish processing, the substrate can be moved to a mechanical rotary system, at which a mechanical rotary tool can be used to finish processing the initial holes.

In Fig. 18B(a), a liquid jet 1816 can be used to form blind hole 1834 in a substrate 1800. The liquid jet can make a blind hole in a location of the substrate. The liquid jet then moves to another location to form another blind hole. The process is continued until all blind holes are formed in the substrate.

In Fig. 18B(b), the substrate is flipped, e.g., the opening side of the blind holes are now in the opposite side of the liquid jet. The liquid jet can be aligned to the blind hole, for example, by an alignment module. After being aligned, the liquid jet can make another blind hole in opposite side of the aligned blind hole. The liquid jet can further process to connect the two blind holes to form a through hole, connecting two sides of the substrate.

After forming a through hole, the liquid jet can move to another location on the substrate to form a subsequent through hole, by making a blind hole connecting to the existing opposite blind hole.

The through holes in the substrate can be initial holes, e.g., the through holes are subsequently finished by a subsequent mechanical rotary tool, for example, to smooth the wall of the holes.

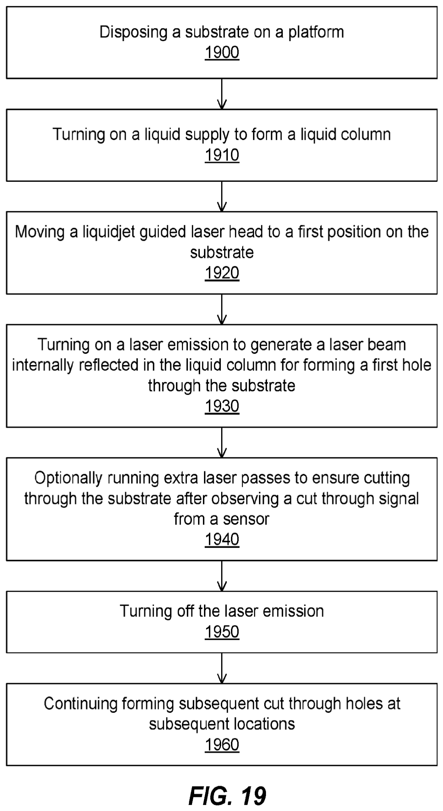

Fig. 19 illustrates a closed loop process for drilling holes with a liquid-jet guided laser according to some embodiments. A laser machining process for drilling a bore, or a core hole of a bore can be started. The laser machine tool can move the liquid-jet guided laser head to the first of a number of machining positions. The laser process can be activated. Once at least one sensor detects a cut-through signal, the laser process can run a defined amount of extra safety passes. After running a defined amount of safety passes the laser process can stop and the laser machine tool can move the liquid-jet guided laser head to the next of the number of machining positions. The loop continues and can be completed once the last of the number of machining positions is finished.

Operation 1900 disposes a substrate on a platform. A nozzle of a liquid-jet guided laser head can be used to form a liquid jet. The nozzle can also be aligned to a laser beam to obtain the internally reflected laser beam within the liquid jet. Operation 1910 turns on a liquid supply to form a liquid column. Operation 1920 moves a liquid jet guided laser head to a first position on the substrate. Operation 1930 turns a laser emission ON to generate a laser beam internally reflected in the liquid column for forming a first hole through the substrate. Operation 1940 optionally runs extra laser passes to ensure cutting through the substrate after observing a cut through signal from a sensor. Operation 1950 turns off the laser emission. Operation 1960 continuing forms subsequent cut through holes at subsequent locations.

In some embodiments, the present invention discloses a subsequent process to finishing an initial hole formed by a liquid-jet guided laser system, such as smoothing the sidewall of the initial hole and obtaining a desired final diameter for the hole, while ensuring that the entrance and exit edges are not damaged. The finishing process can be performed by a mechanical rotary tool, such as a drill bit, a side mill bit, an end mill bit, a reamer, or a honing tool, which can smooth the sidewall of the initial hole. Using a rotary tool having a diameter equal to the diameter of the final hole, the rotary tool can also condition the initial hole to have the final diameter, at the same time of smoothing the sidewall. Further, using a rotary tool having a rounded tip, such as an oval tip, the rotary tool can also avoid an abrupt starting contact between the rotary tool with the surface at the hole entrance, which then can condition the edge of the hole entrance to obtain sharp edges at the hole entrance without edge deterioration such as chipped edges or irregular edges. In some embodiments, the substrate can be flipped, and the rotary tool can form sharp edges, e.g., non-damage edges, at the other end of the through hole, e.g., the hole exit.

The mechanical rotary process can include a cutting process or a honing or grinding process. A cutting process can include one or more sharp edges at the cutting tool for cutting away material in the substrate. For example, a drill bit can have a cone shape cutting end at the tip portion of the drill bit for removing material in an axial direction. The drill bit can have sharp cutting edges on the flute part of the drill bit for removing material from the sidewall of the drilled hole. A honing process can include one or more rough surface at the honing tool for removing material in the substrate by the honing process.

The mechanical rotary process can include a drilling process, a boring process, a reaming process, a milling process, or a honing process. Drilling is a cutting process, which can use a drill bit to cut a circular shape hole in a substrate. A mechanical rotary tool, such as a drill bit, can be used in the drilling process for cutting the material. The drilling process can be performed with or without an initial hole. With the initial hole, the drill bit can rotate while subsequently scraping material from the sidewall of an initial hole. Without the initial hole, the drill bit can dig into the substrate to form the circular shape hole. A mechanical rotary head can be used to hold and rotate the rotary tool.

Boring is also a cutting process, which can use a single-point cutting tool, a boring head, or a boring bar to enlarge an existing hole in the substrate. The boring process is similar to drilling with an initial hole, which is performed to enlarge and smooth an initial hole in the substrate. The boring process is different from drilling without an initial hole, which is performed to create an initial hole in the substrate.

Reaming is also a cutting process, which can use a rotary cutting or honing tool, such as a reamer or a reaming bit, to create smooth interior walls in an existing hole in a substrate. Like drill bits and boring bars, reamers also remove sidewall material from the initial hole. However, reamers remove significantly less material, e.g., removing material at a slower rate, than drill bits. Reamers are usually used to create smooth walls in the initial hole.

Honing is an abrasive machining process, which can use a hone tool or a honing tool, to produce a precision surface on a metal workpiece by scrubbing an abrasive grinding stone or grinding wheel. The honing tool can include a diamond abrasive boring bar. The tool is expandable, to compensate for diamond sleeve wear.

In some embodiments, the rotary tool can be selected based on the purpose of the work. For example, drill bits can be used for quickly enlarging the initial hole, with rough sidewall surface. Boring bars are more precise, and can generate smoother sidewall surface. Reamers and honing tool are more precise, among the three types of rotary cutting or honing tools, and also can generate the smoothest surface.

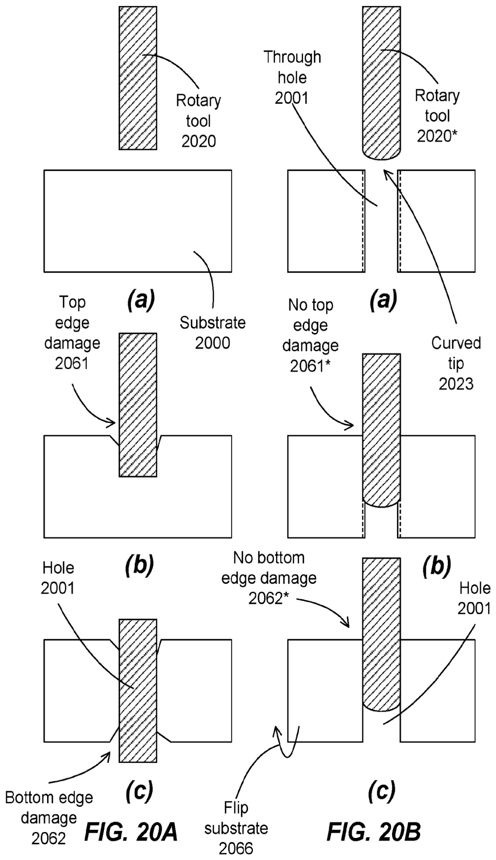

Figs. 20A - 20B illustrate a process for forming holes according to some embodiments. Fig. 20A(a) - 20A(c) show a process to use a mechanical rotary tool without an initial hole. For example, precision holes 2001 in a ceramic substrate 2000 for gas distribution and uniformity plates, can be formed by drilling each hole 2001 sequentially with a mechanical rotary tool 2020, such as a drill bit without an initial hole. A typical substrate 2000 of a gas distribution or uniformity plate is made of mono-crystalline silicon material and can have 1000 - 2000 high aspect ratio precision holes 2001 with a hole diameter of 0.2 - 0.8 mm and a hole depth of as much as 10 - 15 mm to create a fluid connection between the front side and the back side of the substrate. To achieve the desired hole diameter, typically a rotary tool having an identical diameter is used. Requirements for the holes of a gas distribution or uniformity plate can including having the inner wall of each hole to be smooth, mirror-alike, to avoid adherence of unwanted particles that can potentially contaminate an actual product wafer onto which the gas that passes through these holes 2001 is guided to.

A drilling tool 2020 can typically achieve the desired mirror-alike surface finish of the hole inner wall. To insure stable and repeatable gas distribution, the hole entrance as well as the hole exit must also have a sharp edge without any circumferential damage. Since the substrate 2000 can be a brittle substrate, such as mono-crystalline silicon, a mechanical drilling tool can pose an increased risk of material chipping 2061 on the hole entrance and also material chipping 2062 on the hole exit.

Furthermore, when processing ceramic substrates 2000, there is substantial wear to the drilling tool resulting in shortened tool lifetime, such as when processing materials like silicon or silicon carbide. In terms of throughput, each hole 2001 can take 3 - 4 minutes to drill. If the drill bit breaks at, for example, hole number 1480 in a substrate requiring 1500 holes, the entire substrate 2000 can potentially be scrapped, and many hours of machining work are lost.

Fig. 20B(a) - 20B(c) show a process to use a mechanical rotary tool 2020* with an initial hole. An initial hole 2001 can be formed in a substrate 2000. The diameter of the initial hole can be slightly smaller than the diameter of a final hole, for example, the initial diameter can be between 75% and 99% of the final diameter. Alternatively, the difference between the final diameter and the initial diameter can be a few times, such as 2X to 10X, or 2X to 6X, or 2X to 4X of the roughness of the initial hole surface. Thus, the rotary tool can smooth the sidewall surface of the initial hole to the final hole without much removal of the sidewall material.

The rotary tool 2020* can have a tool tip 2023, e.g., a tip that can allow the rotary tool to contact the top edge from the sidewall surface, e.g., contacting the top edge at an angle not perpendicular to the top surface of the substrate, which can reduce a potential material chipping at the top edge. Thus, with the tool tip and the minimal material to be removed from the sidewall, especially at the top edge, the top edge of the hole can have no irregular shaper, such as no chipping or no damage 2061*. The rotary tool can continue, thus can pass through the hole from the top direction.

In some embodiments, the substrate can be flipped 2066, e.g., the rotary tool 2020* is removed from the substrate before completing the though hole, and the substrate is flipped to let the bottom surface of the substrate facing the rotary tool. The rotary tool then can rotate and move downward to finishing the hole from the new side, e.g., from the bottom side now becomes the top side. With the tool tip, the bottom edge can have no chipped edge or no damage 2062*.

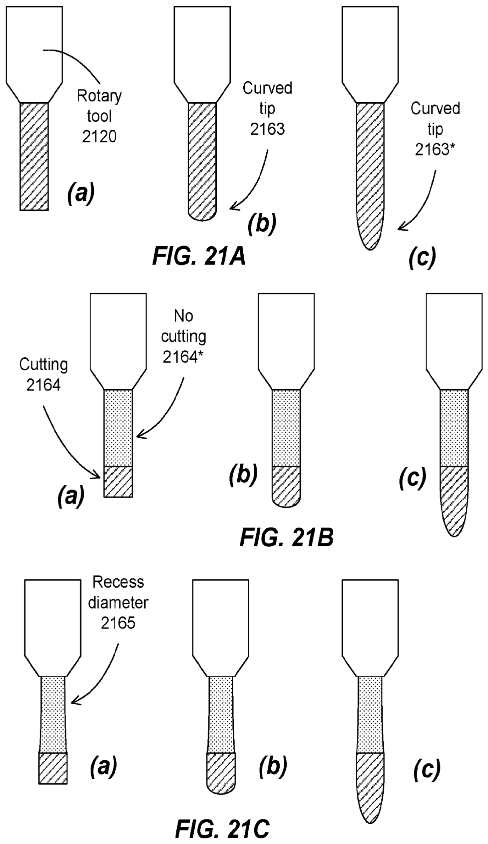

Figs. 21A - 21C illustrate configurations for mechanical rotary tools according to some embodiments. The mechanical rotary tool can be used for finishing a hole formed by a liquid jet process, be a combination of a liquid jet process and an EDM process, or by an EDM process. To remove the remaining material between the core hole and the final hole diameter, the mechanical tool can be rotated with a speed of more than 20.000 RPM. In some embodiments, the mechanical tool can be rotated with between 40.000 and 120.000 RPM (rotations per minute).

Based on the substrate material, a mechanical rotary tool 2120 for finishing a core hole into a final hole diameter can have different shapes for optimal material removal, desired hole inner wall surface finish and tool lifetime. The mechanical rotary tool can be a drill bit, a reamer, a milling tool or a honing tool.

Figs. 21A(a) - 21A(c) show different tool tips of the rotary tools, which can have tip parameters optimized for a core hole finishing process. A tool tip 2163 or 2163* of the mechanical tool 2120 can be a flat tip, or can have a tip that is optimized to enable a soft self-centering of the tool into the center-axis of a core hole. The tool tip can have a conical shape, a half-ball shape or another suitable convex shape.

Figs. 21B(a) - 21B(c) show different configurations for the rotary tool body, such as having main cutting surfaces 2164 and secondary cutting (or non-cutting) surfaces 2164*. The tool main cutting surface 2164 can be made of a carbide, a hard metal, a boron carbide, a silicon nitride, or a cubic boron nitride. In some embodiments, the tool cutting main surface can be made from a diamond material, such as a synthetic diamond material. Examples of such synthetic diamond material are poly crystalline diamond (PCD), mono crystalline diamond (or single crystalline diamond SCD), or diamonds particles in a binder material.

In some embodiments, the rotary tool can have tool main cutting surface 2164 made from a diamond material, connected to a secondary cutting or a non-cutting surface 2164* made from a different material, such as a carbide, a hard metal, a boron carbide, a silicon nitride, or a cubic boron nitride.

In some embodiments, the rotary tool can have the tool main cutting surface 2164 made from a diamond material with the tool main cutting surface extending all the way up the tools shaft.

Figs. 21C(a) - 21C(c) show different tool shaft configurations for the rotary tool. Typically, a rotary tool can have a same diameter throughout the whole main and secondary cutting surfaces. In some embodiments, the rotary tool can have a second tool diameter to optimize different parameters of a core hole finishing process. For example, a rotary tool can have tool cutting main surface with a first tool diameter, connected to a tool secondary cutting surface having a second tool diameter, such as a recess diameter 2165.

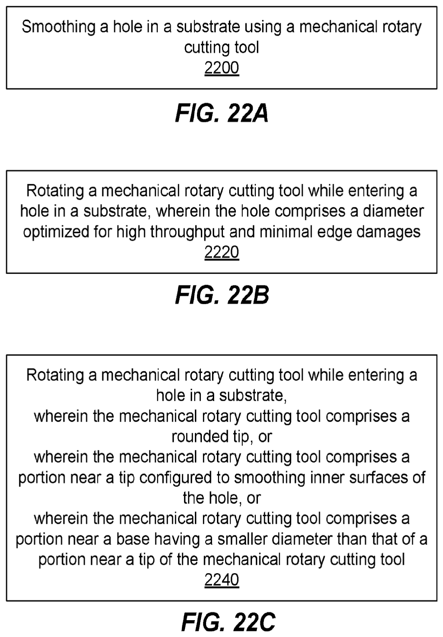

Figs. 22A - 22C illustrate flow charts for finishing a hole in a substrate according to some embodiments. In Fig. 22A, operation 2200 smoothens a hole in a substrate using a mechanical rotary tool. In Fig. 22B, operation 2220 rotates a mechanical rotary tool while entering a hole in a substrate, with the hole having a diameter optimized for high throughput and minimal edge damages.

In Fig. 22C, operation 2240 rotates a mechanical rotary tool while entering a hole in a substrate. The mechanical rotary tool can have a rounded tip. The mechanical rotary tool can have a portion near a tip configured to smoothing inner surfaces of the hole. The mechanical rotary tool can have a portion near a base having a smaller diameter than that of a portion near a tip of the mechanical rotary tool.

In some embodiments, a gas distribution or uniformity plate can be formed by a combination of a liquid jet process and a mechanical rotary process. For example, a core hole can be initially formed using a liquid-jet guided laser, and then the core hole is finished to a final hole using a mechanical rotary tool. The liquid-jet guided laser can be applied to quickly drill deep and high-quality micro holes without any tool wear. To form a core hole into a substrate, the liquid-jet guided laser can either make a circular machining motion and cut out a cylindrical pin, or the liquid-jet guided laser can make spiraling, or a combination of a circular and spiraling machining motion to remove all material inside the diameter of a core hole.

The hole side wall surface roughness can achieve values of lower than Ra 1um, or even roughness of lower than Ra 0.3um. Work pieces such as substrates for gas distribution and uniformity plates for semiconductor processing equipment, can however require hole side wall roughness values of lower than Ra 0.1um. A mechanical drilling tool can achieve such roughness values of lower than Ra 0.1um, however the drilling process is slow because the drill needs to gently enter into and exit from the substrate material to avoid damage to the hole entrance and the hole exit in form of substrate material that chips away. Such drilling process can take 3-5 minutes to make only one hole. Also, the drilling tool can wear as quickly as after only several hundreds of holes.

In some embodiments, a liquid-jet guided laser is applied to quickly remove the majority of material from a hole and with that perform all the heavy lifting in terms of material removal quickly and without any tool wear. The liquid-jet guided laser can be applied to quickly form a core hole that is slightly smaller in diameter than the desired final hole diameter. For example, if the desired final hole diameter is 0.45 mm in a 11 mm thick silicon substrate, the liquid-jet guided laser can be applied to rapidly form a 0.40 mm diameter core hole. Depending on the liquid-jet guided laser parameters, such core hole can be formed in for example 30 - 60 seconds.

After the hole is formed, a mechanical tool can be applied to remove the little remaining material. A tool with a tool diameter matching the final hole diameter can expand the core hole diameter to the final hole diameter, while only having to remove very little material. Thus, the feed speed of the mechanical tool in the direction along the center axis of the core hole can be significantly faster as compared to drilling the final hole through the entire bulk substrate material. Such finishing step can be completed in for example 30 - 60 seconds, so that the overall time to drill a desired hole diameter in a desired quality and roughness can be reduced by 50% or more.

In some embodiments, the operations of forming a core hole by a liquid-jet guided laser and finishing a core hole into a final hole diameter with a mechanical tool can be applied in a same machine (liquid-jet guided laser + mechanical drill) or in two separate machines, depending on the preferred material flow and tact times in a production facility.

In some embodiments, the initial hole can be formed by an EDM process, such as a combination of a liquid jet and an EDM process, or only by the EDM process. For example, a wire based electrode EDM process can be used in combination with a liquid jet process to form the initial hole. Alternatively, a sinking electrode based EDM process can be used to form the initial hole, without the liquid jet process.

After forming the initial hole, by either a liquid jet process, an EDM process, or a combination of a liquid jet and an EDM process, the initial hole can be finished, such as being smoothed to a final dimension, by a mechanical rotary tool to obtain a final hole having a desired diameter and a desired quality and roughness value.

In some embodiments, the mechanical rotary tool can be configured to smooth the initial holes from one side, from 2 sides in a sequential fashion, or from 2 sides simultaneously. In addition, the initial through hole can be formed by a liquid jet from one side or from 2 sides.

In some embodiments, the hole finishing process can be optimized based on the initial hole formation, based on the substrate material, and also based on the final hole requirements. For achieving the best hole, sidewall quality as well as entrance and exit side quality must be considered for different core hole finishing strategies. For example, a core hole can fluidly connect an upper side of a substrate to a lower side of a substrate. A mechanical tool can be applied to finish the core hole to a desired final hole diameter. The mechanical tool can have a tool diameter that is equal to or slightly smaller than the desired final hole diameter.

In some embodiments, a core hole can be a blind hole that covers more than 30% of the substrate depth , such as more than 50% but less then 95% of the substrate depth. A mechanical tool can be applied to finish the core hole to a desired final hole diameter. The mechanical tool can enter the substrate from the open side of the core hole. The mechanical tool can create the final protrusion through the lower side of the substrate. The mechanical tool can have a tool diameter that is equal to or slightly smaller than the desired final hole diameter.

In some embodiments, a core hole can be a blind hole that covers more than 30% of the substrate depth, such as more than 50% but less then 95% of the substrate depth. A mechanical tool can enter the substrate from the blind side of the core hole and drill through the full material until it reaches an open portion of the core hole. The mechanical tool can then be applied to finish the core hole to a desired final hole diameter. The mechanical tool can have a tool diameter that is equal to or slightly smaller than the desired final hole diameter.

In some embodiments, a core hole can consist of two blind holes, cach at an opposite side of a substrate with the center axis of each core hole essentially on the same axis through the substrate. Each of both blind holes can cover more than 30% but less than 45% of the substrate depth. A mechanical tool can enter the substrate from the open side of either core hole. The mechanical tool can create the final protrusion through the center portion of the substrate. The mechanical tool can have a tool diameter that is equal to or slightly smaller than the desired final hole diameter. This method can be preferable for very brittle substrate materials that are sensitive to material chipping when a mechanical tool enters either side of the substrate face. The critical protrusion is made inside the substrate where material chipping risk is low.

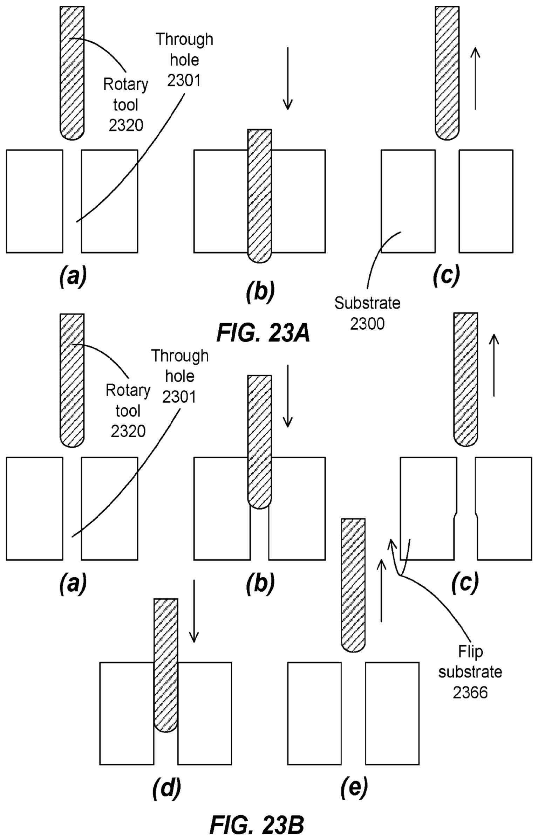

Figs. 23A - 23B illustrate processes for finishing initial through holes according to some embodiments. Figs. 23A(a) - 23A(c) show a rotary tool 2320 approaching a through hole 2301 in a substrate 2300. The through hole 2301 can be formed by a liquid jet process, having a diameter slightly smaller than the diameter of the rotary tool 2320. The rotary tool can rotate and enter the initial through hole 2301 for smoothing the sidewall of the initial through hole, and also for making the initial through hole having the final diameter. The rotary tool can withdraw from the substrate, for example, to move to another through hole.

Figs. 23B(a) - 23B(c) show another process for a rotary tool 2320 to finish or smooth an initial through hole in a substrate. The rotary tool can smooth a portion of the through hole from a first side of the substrate. The rotary tool can then withdraw from the substrate. The substrate then can be flipped 2366. The rotary tool can smooth the remaining portion of the through hole from a second side of the substrate, opposite the first side. The rotary tool can then withdraw from the substrate.

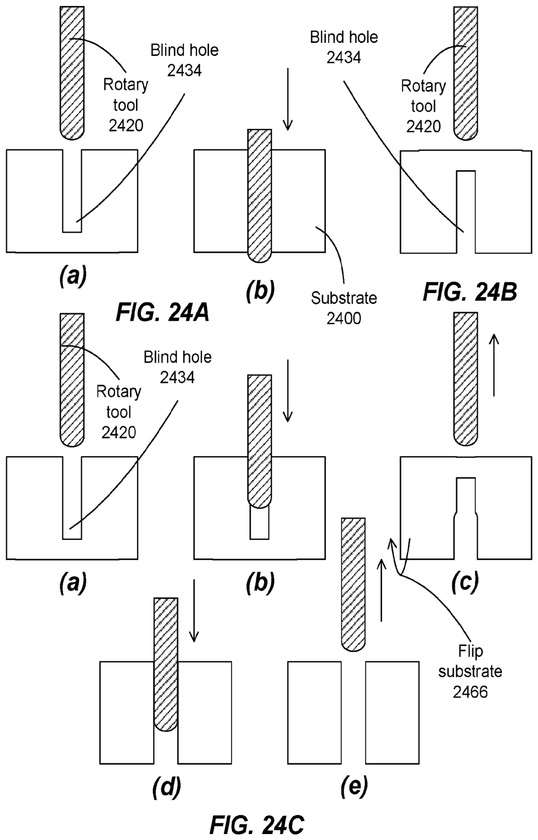

Figs. 24A - 24C illustrate processes for finishing initial one-side blind holes according to some embodiments. Figs. 24A(a) - 24A(b) show a rotary tool 2420 approaching a blind hole 2434 from the opening side of the blind hole. The blind hole 2434 can be formed in the substrate 2400 by a liquid jet process, having a diameter slightly smaller than the diameter of the rotary tool 2420. The rotary tool can rotate and enter the initial blind hole 2434 for smoothing the sidewall of the initial blind hole, and also for making the initial blind hole having the final diameter. The rotary tool can withdraw from the substrate, for example, to move to another blind hole.

Fig. 24B shows another process for finishing a blind hole a rotary tool 2420 approaching a blind hole 2434 from the blind side of the blind hole, e.g., from the opposite side of the opening of the blind hole. The blind hole 2434 can be formed in the substrate 2400 by a liquid jet process, having a diameter slightly smaller than the diameter of the rotary tool 2420. The substrate then can be flipped to present the blind side of the blind hole to the rotary tool. The rotary tool can rotate and cut into the substrate from an aligned location which is the center of the blind hole. The rotary tool then can form the final through hole, smoothing the sidewall of the hole, and also for making the initial hole having the final diameter. The rotary tool can withdraw from the substrate, for example, to move to another blind hole.

Figs. 24C(a) - 24C(e) show another process for a rotary tool 2420 to finish or smooth an initial blind hole in a substrate. The rotary tool can smooth a portion of the blind hole from an opening side of the blind hole. The rotary tool can then withdraw from the substrate. The substrate then can be flipped 2466. The rotary tool can smooth the remaining portion of the blind hole from a second side of the substrate, opposite the opening side of the blind hole. The rotary tool can then withdraw from the substrate.

Alternatively, the rotary tool can first smooth a portion of the blind hole from the opposite side of the opening side of the blind hole.

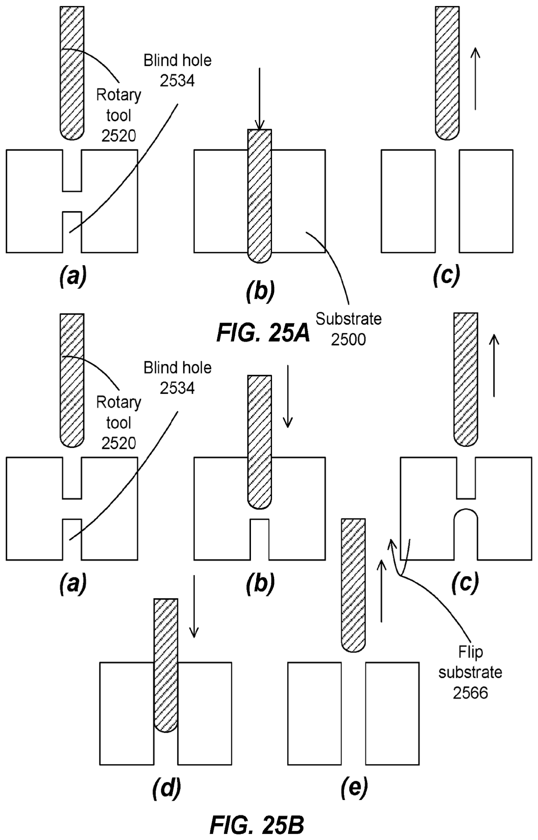

Figs. 25A - 25B illustrate processes for finishing initial two-side blind holes according to some embodiments. Figs. 25A(a) - 25A(c) show a rotary tool 2520 approaching a blind hole 2534 from any one of two opening sides of the blind hole. The blind hole 2534 can be formed in the substrate 2500 by a liquid jet process, having a diameter slightly smaller than the diameter of the rotary tool 2520. The rotary tool can rotate and enter the initial blind hole 2534 for smoothing the sidewall of the initial blind hole, and also for making the initial blind hole having the final diameter. The rotary tool can withdraw from the substrate, for example, to move to another blind hole.

Figs. 25B(a) - 25B(e) show another process for a rotary tool 2520 to finish or smooth an initial blind hole in a substrate. The rotary tool can smooth a portion of the blind hole from any one of the two opening sides of the blind hole. The rotary tool can then withdraw from the substrate. The substrate then can be flipped 2566. The rotary tool can smooth the remaining portion of the through hole from a second side of the substrate, opposite the opening side of the blind hole. The rotary tool can then withdraw from the substrate.

In some embodiments, two mechanical tools can be applied for simultaneous finishing of a core hole to a final hole diameter. A first mechanical tool can be placed above a first surface of a substrate. A second mechanical tool can be placed below a second surface of a substrate. The center axis of both mechanical tools is the same. Both mechanical tools can be kept with a constant spacing to each other along their center axis. Either the substrate can move along the axis of both mechanical tools in an oscillating up-down movement, or alternatively both mechanical tools can move along the center axis of the core hole simultaneously in an oscillating up-down movement. As a mechanical tool typically has a certain material removal rate based on its rotations per minute and the feed speed in a direction perpendicular to the substrate, two mechanical tools can remove more material in a shorter time. The oscillating up-down movement can be required to remove substrate material from the hole. Alternatively, a first mechanical tool and a second mechanical tool can also move along the center axis of a core hole independently from each other as desired for an efficient removal process as long as their movements don't collide on the center axis of a core hole

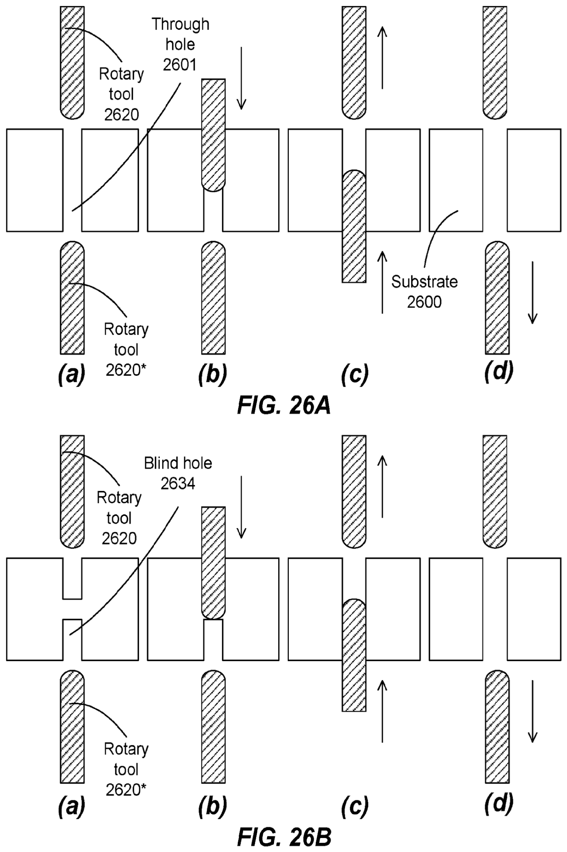

Figs. 26A - 26B illustrate processes for finishing holes using two mechanical rotary tools according to some embodiments. Figs. 26A(a) - 26A(d) show two rotary tools 2620 and 2620* facing two opposite sides of a through hole 2601 in a substrate 2600. The through hole 2601 can be formed by a liquid jet process, having a diameter slightly smaller than the diameter of the rotary tool 2620. The rotary tools can rotate and enter the initial through hole 2601for smoothing the sidewall of the initial through hole, and also for making the initial through hole having the final diameter. The rotary tools can move independently, or can move simultaneously. For example, the two rotary tools can oscillate back and forth from the substrate. The distance between the two rotary tools can be constant, e.g., the two rotary tools oscillate while remaining separated by a constant distance. The distance between the two rotary tools can vary, for example, the distance can vary from a very close to each other to a very far apart. The rotary tool can withdraw from the substrate, for example, to move to another through hole.

Figs. 26B(a) - 26B(d) show two rotary tools 2620 and 2620* facing two opposite sides of a two-side blind hole 2634 in a substrate 2600. The rotary tools can rotate and enter the initial blind hole 2601for smoothing the sidewall of the initial blind hole, and also for making the initial blind hole having the final diameter.

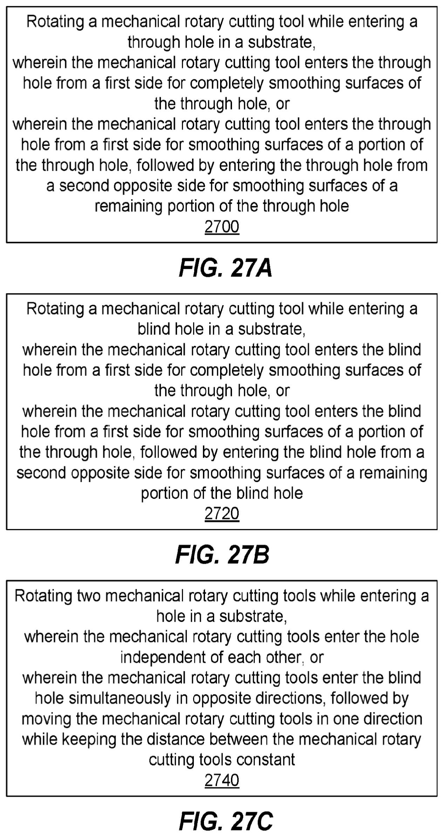

Figs. 27A - 27C illustrate flow charts for finishing initial holes in a substrate according to some embodiments. In Fig. 27A, operation 2700 rotates a mechanical rotary tool while entering a through hole in a substrate. The mechanical rotary tool enters the through hole from a first side for completely smoothing surfaces of the through hole. Alternatively, the mechanical rotary tool enters the through hole from a first side for smoothing surfaces of a portion of the through hole, followed by entering the through hole from a second opposite side for smoothing surfaces of a remaining portion of the through hole.

In Fig. 27B, operation 2720 rotates a mechanical rotary tool while entering a blind hole in a substrate. The mechanical rotary tool enters the blind hole from a first side for completely smoothing surfaces of the through hole. Alternatively, the mechanical rotary tool enters the blind hole from a first side for smoothing surfaces of a portion of the through hole, followed by entering the blind hole from a second opposite side for smoothing surfaces of a remaining portion of the blind hole.

In Fig. 27C, operation 2740 rotates two mechanical rotary tools while entering a hole in a substrate. The mechanical rotary tools enter the hole independent of each other. Alternatively, the mechanical rotary tools enter the blind hole simultaneously in opposite directions, followed by moving the mechanical rotary tools in one direction while keeping the distance between the mechanical rotary tools constant.

In some embodiments, the temperature of the mechanical rotary tool can be conditioned, e.g., regulated, for example, to prevent overheat due to the rotating action of removing material from the sidewall of the holes in the substrate. Further, the mechanical rotary tool can be subjected to a lubricant, for example, to prevent excessive wear and tear for the rotary tool. A liquid or gas flow, or a submerged bath can be used for maintaining a constant temperature for the rotary tool, such as to cool the rotary tool to ambient temperature.

The mechanical tool can be actively cooled before, during and after a material removal process. The active cooling can take place with a cooling fluid, such as water, or a gas such as air or CO₂. The cooling medium can be provided externally to the mechanical tool as axial or radial or angular flow.

In some embodiment, the mechanical tool can have internal cooling channels through which a cooling medium can be guided and ejected onto the tool cutting main surface and the tool cutting secondary surface via an exit port facing the tool tip.

In an alternative configuration, the mechanical tool has a coaxial center hole that fluidly connects the upper part of the tool with the tool tip. Due to the long working length, the liquid-jet guided laser can be guided through this center hole in the mechanical tool. In a first step the liquid-jet guided laser is applied to remove substrate material and form an initial core hole. For this purpose, a portion from the liquid-jet laser that extends beyond the tool tip is applied. In a finishing step the laser beam is switched off and the mechanical tool can start to rotate at a desired speed to remove the remaining material from the core hole. The liquid-jet can keep flowing through the mechanical tool towards the work piece to act as coolant for both the mechanical tool as well as the work piece substrate.

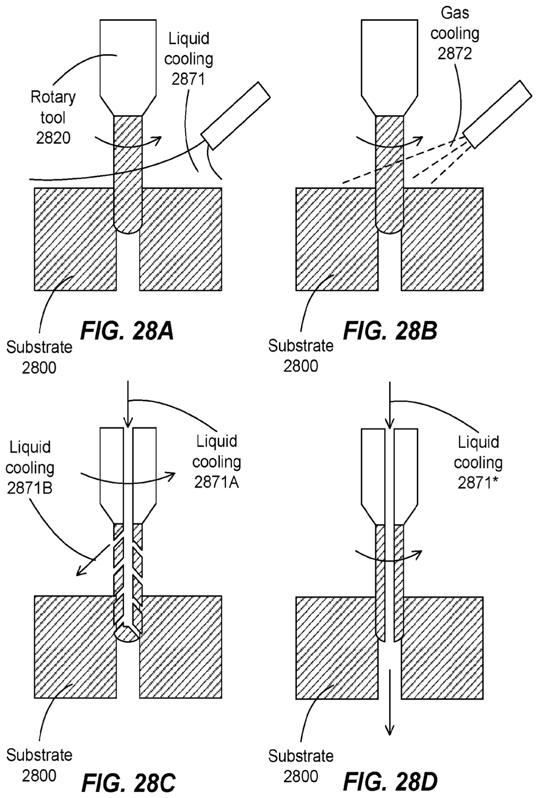

Figs. 28A - 28D illustrate configuration for cooling a rotary tool according to some embodiments. Fig. 28A shows a water flooding nozzle 2871 which floods the work piece, e.g., the substrate 2800, with a cool liquid, such as water, a coolant, or a lubricated liquid. The cool water flow 2871 can remove heat generated by the friction between the rotary tool with the substrate. During the machining process with a rotary tool 2820, the tool 2820 and the substrate 2800 can be cooled down by a liquid cooling flow, such as a water flooding nozzle 2871. The water can have a temperature of ambient temperature or less, such as a temperature of less than 20, 15, or 10° Celsius.

Fig. 28B shows a configuration in which a gas cooling process can be used, such as an air nozzle 2872 that is pointed towards the rotary tool or the area of the substrate that is being machined.

Fig. 28C shows a configuration in which a liquid or a gas cooling process can be used for a channel rotary tool. A liquid 2871A can be provided to a conduit inside the rotary tool, which can then flow outward toward the substrate or the sidewall surface of the hole.

Fig. 28D shows a configuration using a liquid jet of a liquid-jet guided laser head for cooling a rotary tool having a hollowed tool head. The liquid jet 2871* from a liquid jet guided laser head, e.g., only the liquid flow without the internally reflected laser beam, can be used to run inside the hollowed rotary tool for cooling the rotary tool during the smoothing process.

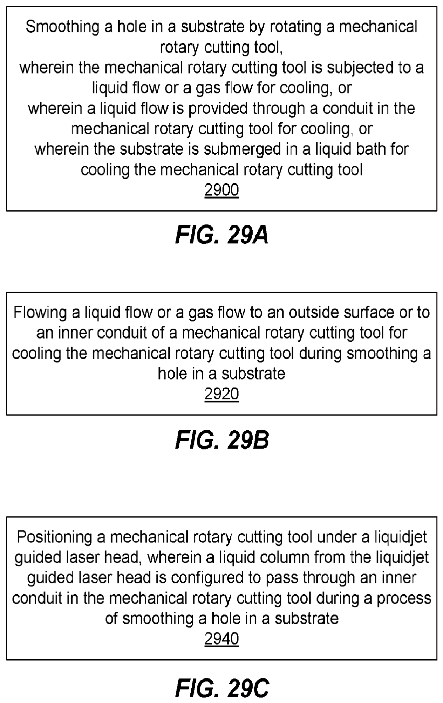

Figs. 29A - 29C illustrate flow charts for cooling a mechanical rotary tool according to some embodiments. In Fig. 29A, operation 2900 smoothens a hole in a substrate by rotating a mechanical rotary tool. The mechanical rotary tool is subjected to a liquid flow or a gas flow for cooling. Alternatively, a liquid flow is provided through a conduit in the mechanical rotary tool for cooling. Alternatively, the substrate is submerged in a liquid bath for cooling the mechanical rotary tool.

In Fig. 29B, operation 2920 flows a liquid flow or a gas flow to an outside surface or to an inner conduit of a mechanical rotary tool for cooling the mechanical rotary tool during smoothing a hole in a substrate.

In Fig. 29C, operation 2940 positions a mechanical rotary tool under a liquid jet guided laser head, with a liquid column from the liquid jet guided laser head configured to pass through an inner conduit in the mechanical rotary tool during a process of smoothing a hole in a substrate.

In some embodiments, an alignment module, such as a camera, can be used to align the mechanical rotary tool to the initial hole formed by the liquid jet. The alignment module can be used to align the mechanical rotary tool after the substrate is flipped, to ensure that the top surface process is aligned with the bottom process.

In order to precisely finish a core hole to a final hole diameter, the center axis of a mechanical tool and the center axis of a core hole must perfectly align to each other. An alignment camera can be applied to find the center axis of a core hole. The alignment camera can be mounted on a mounting plate to which also a tool spindle is mounted. The alignment camera and the tool spindle can have a known offset distance between their respective center axis. The alignment camera can have at least one optical element such as a lens and at least one spatial detector, such as a camera.

To finish an initial hole formed by a previous liquid jet process, in a first step, the alignment camera can measure the position of the center axis of a core hole. In a second step, the mounting plate on which the alignment camera and the tool spindle are mounted can move by a distance equal to the offset distance between the alignment camera and the center axis of the tool spindle and the mechanical tool. Once the mechanical tool axis is placed exactly above the center axis of a core hole, the tool spindle can be lowered to start finishing the core hole to a final hole diameter. The mechanical tool can make an oscillating up-down movement. Alternatively, the mechanical tool only moves in one direction along a core hole from a first surface of a substrate, and through a second, opposite surface of a substrate.

The alignment module can be used to align the rotary tool to an opposite opening of the initial hole, for example, after the substrate is flipped. For example, after smoothing a first portion of the initial hole from a first opening side of the initial hole, the substrate can be flipped to expose a bottom surface of the substrate to the rotary tool. The alignment camera can determine the position of the center axis of the second opening of the core hole. The mounting plate on which the alignment camera and the tool spindle are mounted can move a distance equal to the offset distance between the alignment camera and the center axis of the tool spindle and the mechanical tool. Once the mechanical tool axis is placed exactly above the center axis of a core hole, the tool spindle can be lowered to start finishing the core hole to a final hole diameter.

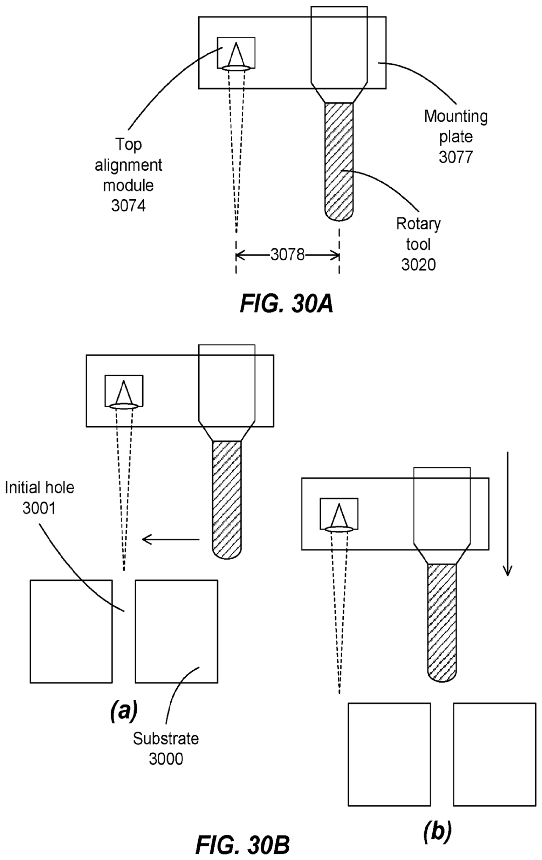

Figs. 30A - 30B illustrate a configuration for an alignment module according to some embodiments. In Fig. 30A, a rotary tool 3020 and an alignment module 3074 can be mounted on a mounting plate 3077. The distance 3078 between the alignment module and the rotary tool can be determined and then used for aligning the rotary tool.

Figs. 30B(a) - 30B(b) show a process for aligning the rotary tool to an initial hole 3001 in a substrate 3000. The alignment module can be used to find the center line of the initial hole. Afterward, the mounting plate containing the alignment module and the rotary tool can move a distance equal to the separation distance 3078 between the alignment module and the rotary tool. The rotary tool is then aligned to the initial hole, and then can be lowered for smoothing the initial hole.

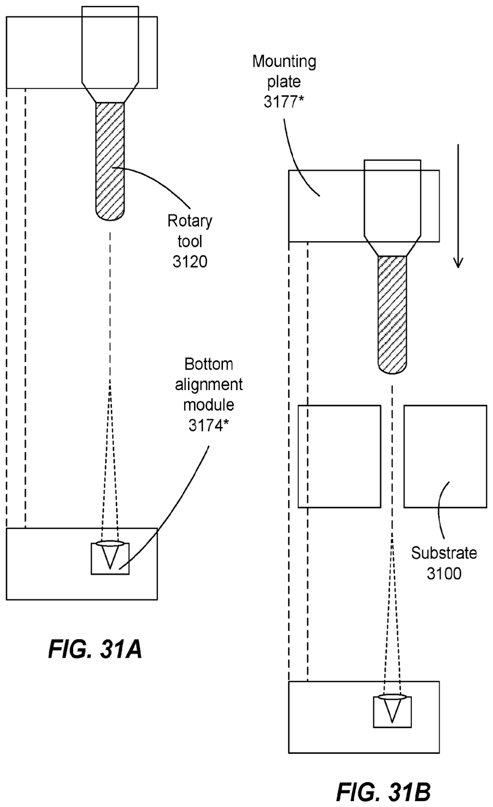

Figs. 31A - 31B illustrate another configuration for an alignment module according to some embodiments. In Fig. 31A, a rotary tool 3120 and an alignment module 3174* can be mounted on a mounting plate 3177*, with the alignment module mounted to an opposite direction from the rotary tool, e.g., the substrate is configured to be disposed between the alignment module and the rotary tool. The alignment module can be aligned with the rotary tool, e.g., the alignment module can be aligned to a center line of the rotary tool.

Fig. 31B shows a process for aligning the rotary tool to an initial hole 3101 in a substrate 3100. The alignment module can be used to find the center line of the initial hole. Afterward, the rotary tool can be lowered for smoothing the initial hole, since the rotary tool is already aligned to the center line of the initial hole.

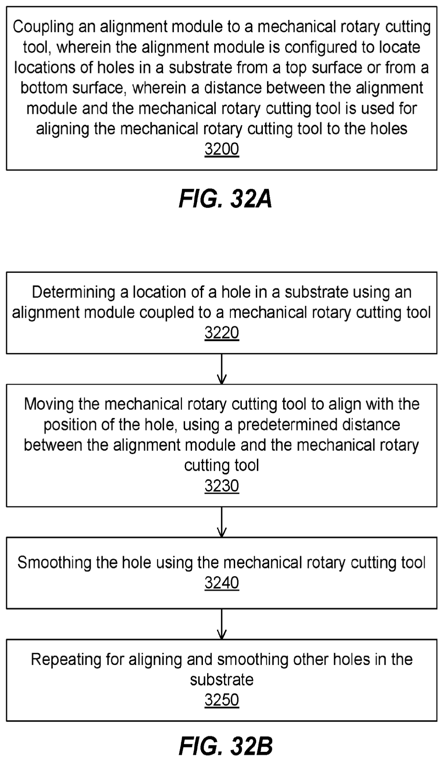

Figs. 32A - 32B illustrate flow charts for aligning a mechanical rotary tool according to some embodiments. In Fig. 32A, operation 3200 couples an alignment module to a mechanical rotary tool, with the alignment module configured to locate locations of holes in a substrate from a top surface or from a bottom surface. A distance between the alignment module and the mechanical rotary tool is used for aligning the mechanical rotary tool to the holes. The distance can be zero if the alignment module is placed in an opposite direction from the rotary tool.

In Fig. 32B, operation 3220 determines a location of a hole in a substrate using an alignment module coupled to a mechanical rotary tool. Operation 3230 optionally moves the mechanical rotary tool to align with the position of the hole, using a predetermined distance between the alignment module and the mechanical rotary tool. The operation is optional if the alignment module is coupled to an opposite direction of the rotary tool, e.g., the alignment module is configured to locate a location of the hole from a bottom surface of the substrate. Operation 3240 smoothens the hole using the mechanical rotary tool. Operation 3250 repeats the above steps for aligning and smoothing other holes in the substrate.

In some embodiments, an inspection module, such as a camera, can be used to inspect the quality of the hole finished by the mechanical rotary tool. The inspection module can be used to continue or to terminate the smoothing process of subsequent initial holes. For example, if the inspected hole passes the quality test, e.g., the sidewall surface roughness is adequate and the hole entrance and exit edge have no deterioration damage, the rotary tool can move to a subsequent initial hole to continue processing. Alternatively, if the inspected hole does not pass the quality test, e.g., the sidewall surface roughness is not adequate or the hole entrance or exit edge indicate a deterioration damage, the process can be terminated.

In some embodiments, the dimension and quality of a finished hole in a substrate can be measured. Precision components, such as gas distribution and uniformity plates for semiconductor processing equipment, typically require hundreds or even thousands of small precision holes machined into thick ceramic substrates. To ensure stable and repeatable gas distribution, the hole entrance as well as the hole exit of each hole must have a sharp edge without any circumferential damage. A machine for making such holes can have a core hole drilling step with a liquid-jet guided laser or with an electric discharge machining process. The core hole can be finished to a desired final hole diameter and quality with a mechanical tool. Sometimes during a core hole drilling process or during a hole finishing process a hole can get damaged, for example a hole entrance or a hole exit can have portions that are chipped away. This can be caused by impurities in the substrate material or by, for example, wear of the mechanical tool that is used for finishing a core holes into a desired hole diameter. To avoid further processing of a substrate that has one or more faulty holes, an inspection of each hole after a processing step with a mechanical tool can be applied.

In some embodiments, the hole inspection process can also be applied after a core hole is created by a liquid-jet guided laser or an electric discharge machining process. A tool spindle with a mechanical tool can be mounted on a mounting plate inside a machine for processing the substrate. An inspection camera can be mounted to the same mounting plate. The inspection camera can include an illumination module to illuminate a substrate surface. The inspection camera can contain at least one optical element that is suitable to image an area that is equal to or larger than a hole diameter onto a sensing device such as a CCD camera. The illumination module can illuminate an area that is equal to or larger than a hole diameter. Imperfections to the hole circumference can be detected by variations in shape and brightness as compared to a desired hole contour.

In some embodiments, a top inspection module and a bottom inspection module can be configured to measure the dimension and quality of a finished hole in a substrate simultaneously on both sides of a substrate. The optical axes of the top and bottom inspection modules can be the same, e.g., the top and bottom inspection modules have a same optical axis. The top inspection camera can include a top illumination module to illuminate an upper surface of a substrate as well as illuminate through a hole towards the bottom inspection camera. The bottom inspection camera can include a bottom illumination module to illuminate a lower, opposite surface of a substrate as well as illuminate through a hole towards the top inspection camera.

In some embodiments, a top illumination module can illuminate a hole entrance of a hole. The top inspection camera can detect imperfections to the hole circumference by analyzing variations in shape and brightness as compared to a desired hole contour. Such analysis can be performed by connecting the top inspection camera to, for example, a computing device. In addition to witching on the top illumination module, the bottom illumination module can be switched on so that the top inspection camera can detect imperfections inside the hole itself, such as inspecting a un-roundness, high roughness or particles on a hole sidewall. The top illumination module and the bottom illumination module can be switched on simultaneously or sequentially.

In some embodiments, a bottom illumination module can illuminate a hole exit of a hole. The bottom inspection camera can detect imperfections to the hole circumference by analyzing variations in shape and brightness as compared to a desired hole contour. Such analysis can be performed by connecting the upper inspection camera to for example a computing device. In addition to switching on the bottom illumination module, the top illumination module can be switched on so that the bottom inspection camera can detect imperfections inside the hole itself, such as inspecting a un-roundness, high roughness or particles on a hole side wall.

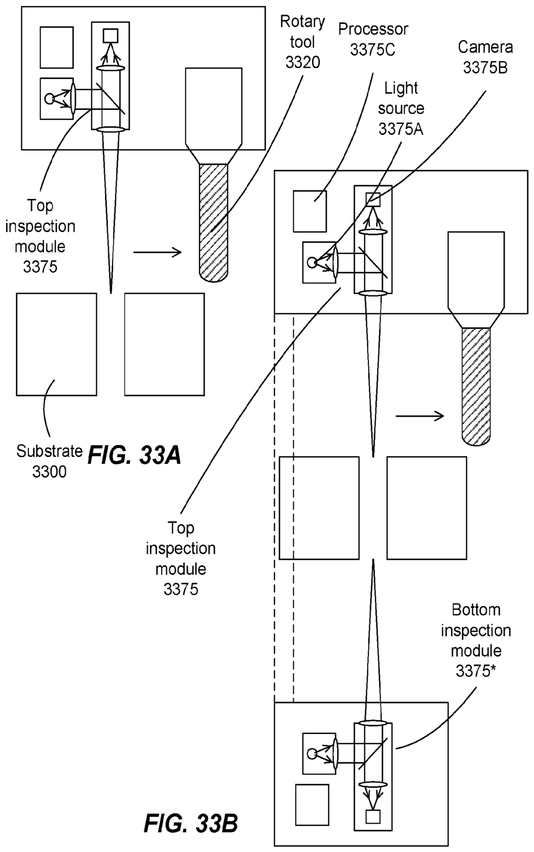

Figs. 33A - 33B illustrate configurations for inspection modules according to some embodiments. In Fig. 33A, a rotary tool 3320 and an inspection module 3375 can be mounted on a mounting plate. The distance between the inspection module and the rotary tool can be determined and then used for aligning the inspection module after the rotary tool finishes processing. The inspection module can include a light source 3375A, for example, an LED light. The inspection module can include an inspection camera 3375B for capturing images of the processed hole. The inspection module can include a processing module 3375C for analyzing the images captured by the camera 3375B.

In operation, the rotary tool 3320 can finish an initial hole, such as smoothing the sidewall and making the initial hole having a final desired diameter. The mounting module on which the inspection module and the rotary tool are mounted can move a distance equal to the separation between the inspection module and the rotary tool. The inspection module can then inspect the quality of the hole just processed by the rotary tool.

In Fig. 33B, a top inspection module 3375 and a bottom inspection module 3375* can be coupled to a rotary tool 3320. The top and bottom inspection modules can be aligned, e.g., having a same optical axis for inspecting a top portion and a bottom portion of the hole.

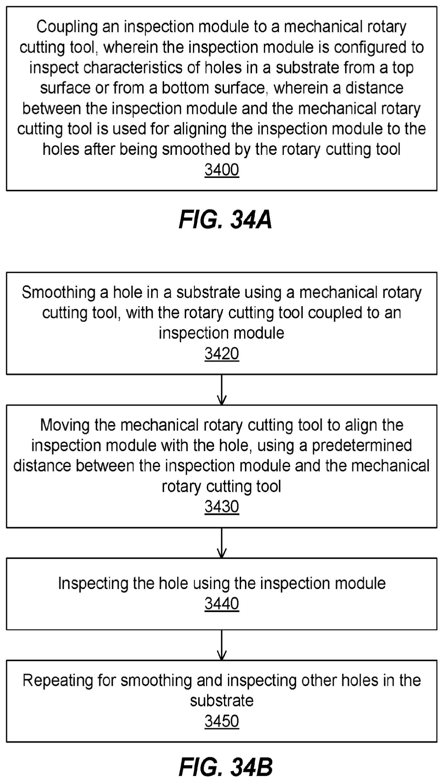

Figs. 34A - 34B illustrate flow charts for inspecting final holes in a substrate according to some embodiments. In Fig. 34A, operation 3400 couples an inspection module to a mechanical rotary tool, with the inspection module configured to inspect characteristics of holes in a substrate from a top surface or from a bottom surface. A distance between the inspection module and the mechanical rotary tool is used for aligning the inspection module to the holes after being smoothed by the rotary tool.

In Fig. 34B, operation 3420 smoothens a hole in a substrate using a mechanical rotary tool, with the rotary tool coupled to an inspection module. Operation 3430 moves the mechanical rotary tool to align the inspection module with the hole, using a predetermined distance between the inspection module and the mechanical rotary tool. Operation 3440 inspects the hole using the inspection module. Operation 3450 repeats the previous steps for smoothing and inspecting other holes in the substrate.

In some embodiments, the present invention discloses methods and systems for forming holes in a substrate, which can be used in gas distribution and uniformity plates. The methods can include forming initial holes in a substrate using a liquid-jet guided laser system, or an electric discharge machining system, or a combination of a liquid-jet guided laser system and an electric discharge machining system. The methods can further include finishing the formed initial hole, such as enlarging the initial hole to a desired final diameter, while ensuring that the sidewall of the final hole are smooth and the entrance and exit edges are not damaged. The finishing process can be performed by a mechanical rotary tool, such as a drilling bit, a reamer, a milling bit, a boring bar, or a honing bit.

In some embodiments, the hole forming process and the hole finishing process can be performed in different equipment, such as a first equipment of a liquid jet guided laser system for forming the initial hole, and a second equipment of a mechanical rotary tool for finishing the initial hole.

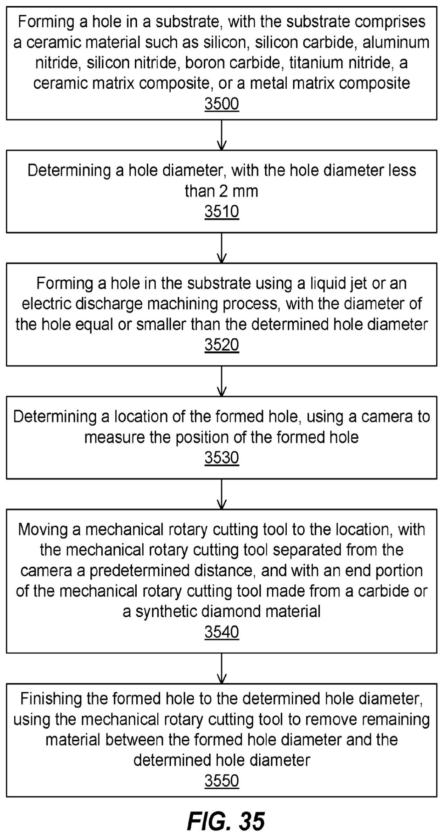

Fig. 35 illustrates a flow chart for completely forming a hole in a substrate according to some embodiments. The complete hole formation can include forming an initial hole in a substrate and finishing the initial hole with a mechanical tool to a desired hole diameter having desired characteristics.

Operation 3500 machines at least one hole into a substrate, wherein the substrate is a ceramic substrate and the ceramic material being one of a Silicon, a Silicon Carbide, an Aluminum Nitride, a Silicon Nitride, a Ceramic Matrix Composite (CMC), a Metal Matrix Composite (MMC), a Boron Carbide, or a Titanium Nitride. Operation 3510 determines a desired hole diameter, wherein the desired hole diameter is smaller than 2mm. Operation 3520 drills a core hole, wherein a liquid-jet guided laser or an electric discharge machining process is applied to make a core hole diameter that is equal to, or smaller than the desired final hole diameter. Operation 3530 determines the precise location of the core hole, wherein a camera is applied to measure the position of said hole as offset distance to a spindle. Operation 3540 provides a mechanical tool to the spindle, wherein the mechanical tool is one of a drill bit, a reamer, or a milling tool and wherein at least an end portion of the tool cutting surface is made from one of a carbide, or a synthetic diamond material. Operation 3550 finishes the core hole to the desired hole diameter, wherein the mechanical tool is applied to remove the remaining material between the core hole diameter and the desired hole diameter. The substrate can also include metal substrates and other work pieces with holes.

In some embodiments, the present invention discloses an integration of a liquid-jet and a mechanical rotary cutting tool for forming holes in a substrate. The integrated system can include a liquid jet guided laser head having a liquid source configured to generate a liquid jet and a laser power source configured to form an internally reflected laser beam in the liquid jet generated by the liquid source. The liquid jet guided laser head can include a coaxial gas flow surrounding the liquid jet to minimize disturbance to the liquid jet. The integrated system can include a mechanical rotary tool configured to enlarge the initial hole and to smooth the surface of the enlarged hole without damaging the entrance and exit edges of the hole.

The mechanical tool has a coaxial center hole that fluidly connects the upper part of the tool with the tip of the tool. Due to the long working length, the liquid-jet guided laser can be guided through this center hole in the mechanical tool.

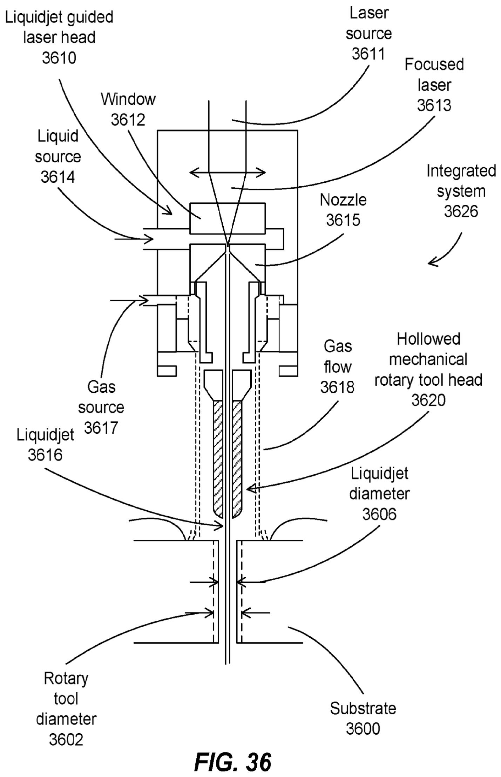

Fig. 36 illustrates a configuration for an integrated system of a liquid jet and a mechanical rotary toll according to some embodiments. An integrated system 3626, e.g., a combination of a liquid-jet guided laser head 3610 and a mechanical hollowed rotary tool head 3620, which can be configured to form an initial hole together with finishing the initial hole. The liquid-jet guided laser head 3610 can include a housing that holds a window 3612. Below the window 3612, there is a liquid-jet nozzle 3615. A liquid source, such as a water source 3614, can be pressed to a space between the window 3612 and the nozzle 3615 to form a laminar liquid jet 3616A. In order to process material, a laser beam from a laser power source 3611 is focused and guided through the window 3612 and through the orifice of the liquid jet nozzle 3615 into the laminar liquid jet 3616A. The focused laser beam 3613 can be confined in the liquid jet 3616A, which can guide the energy of the laser beam 3616B by total internal reflection inside the liquid jet towards the workpiece substrate 3600.

The liquid-jet guided laser head 3610 can include an air-jet module to provide a coaxial gas flow around the liquid jet. Below the liquid jet nozzle 3615, the liquid-jet guided laser passes through an inner conduit of an air jet module 3627. A high-volume stream of compressed gas source 3617 is provide through an outer and mechanically spaced apart conduit of the air jet module 3627, which runs parallel to the liquid-jet guided laser 3616 and towards the surface of the substrate 3600. The stream of compressed gas 3618 acts as a coaxial spaced apart shield that avoids back spray induced disturbances of the liquid-jet guided laser 3616.

The mechanical hollowed rotary tool head 3620 can include a mechanical hollowed rotary tool, which can have a conduit passing through the rotary tool. The mechanical hollowed rotary tool head 3620 can be positioned so that the liquid jet from the liquid-jet guided laser head can enter the conduit, for example, to cool the mechanical hollowed rotary tool.

A motion mechanism can be coupled to the integrated system to move the liquid jet guided laser head and the mechanical rotary tool, for example, in a plane normal to the liquid jet, or in 3 dimensional movement parallel and normal to the liquid jet.

The liquid-jet guided laser beam 3616 can be configured for making holes having an initial diameter 3606 in a substrate, for example, by a straight cutting process, by running multiple passes along a circular contour to cut away a cylindrical material, or by rastering multiple passes inside a close loop contour to form a hole inside the close loop contour.

The mechanical rotary tool can be configured to finish the initial hole, such as enlarging the initial hole to a final diameter 3602 and to smooth the sidewall of the final hole.
The following clauses, describing aspects of the invention, are part of the description:
1. A method comprising
   forming a hole in a substrate using a liquid-jet guided laser beam,
   wherein the liquid-jet guided laser beam comprises a laser beam internally reflected within a column of liquid,
   wherein the column of liquid is formed by flowing the liquid through a nozzle,
   wherein the internally reflected laser beam is formed by focusing a laser beam into the column of liquid;
   smoothing the hole using a mechanical rotary tool to achieve a final dimension,
   wherein the mechanical rotary tool is operated by a mechanical rotating system,
   wherein the mechanical rotary tool comprises a diameter suitable for the final dimension of the hole.
2. A method as clause 1,
   wherein the hole is configured to provide a fluid connection between a top surface and a bottom surface of the substrate.
3. A method as clause 1,
   wherein forming the hole using the liquid-jet guided laser beam comprises forming the hole using at least one of a circular motion or a spiral motion,
   wherein the circular motion or the spiral motion is configured to form the hole having a diameter of between 75 and 99% of the final dimension.
4. A method as clause 1,
   wherein forming the hole using the liquid-jet guided laser beam comprises forming the hole having a diameter of less than 0.05mm than the final dimension.
5. A method as clause 1,
   wherein a diameter of the hole formed by the liquid-jet guided laser system is configured to minimizing a total processing time of the liquid-jet guided laser beam and the mechanical rotary tool.
6. A method as clause 1,
   wherein the mechanical rotary tool is configured to smooth the hole to achieve a surface finish having a roughness average (Ra) less than 0.3 micrometers.
7. A method as clause 1,
   wherein the liquid-jet guided laser beam and the mechanical rotary tool are configured to form and smooth the hole having a sharp edge without circumferential damages.
8. A method as clause 1,
   wherein the substrate comprises at least one of silicon, silicon carbide, aluminum nitride, silicon nitride, titanium nitride, boron carbide, ceramic matrix composites (CMC), or metal matrix composites (MMC).
9. A method as clause 1, further comprising
   forming a coaxial flow of gas surrounding the column of liquid,
   wherein the coaxial gas flow is configured to minimize disturbance to the column of liquid due to a back spray of the column of liquid when hitting the substrate.
10. A method as clause 1,
   wherein forming the hole using the liquid-jet guided laser beam and finishing the hole using the mechanical rotary tool are performed in a same machine.
11. A method as clause 1,
   wherein forming the hole using the liquid-jet guided laser beam and finishing the hole using the mechanical rotary tool are performed in different machines.
12. A method as clause 1,
   wherein the mechanical rotary tool comprises a mechanical drill bit, a mechanical reamer, a mechanical boring bar, a mechanical milling tool, or a mechanical honing tool.
13. A method as clause 1,
   wherein the mechanical rotary tool comprises an end portion made of a polycrystalline diamond or a single crystalline diamond material.
14. A method as clause 1,
   wherein the hole is configured to pass completely through the substrate,
   wherein the method further comprises detecting a cut through of the hole by at least one of an optical sensor or an acoustic sensor.
15. A method as clause 1, further comprising
   heating the substrate during the formation of the hole using the liquid-jet guided laser
      beam,
   wherein heating the substrate comprises at least one of flowing a higher-than-ambient-temperature liquid over a surface of the substrate, flowing a higher-than-ambient-temperature gas over the surface of the substrate, applying an infrared or an inductive energy over the surface of the substrate, or submerging the substrate in a higher-than-ambient-temperature liquid,
   wherein a temperature of the higher-than-ambient-temperature liquid or gas is between 50 and 100 degrees Celsius.
16. A method as clause 1, further comprising
   inspecting the hole after the hole is smoothed by the mechanical rotary tool,
   wherein the inspection comprises a camera.
17. A method comprising
   disposing a substrate having a first surface facing a liquid-jet guided laser head;
   forming multiple blind holes in a substrate using a liquid-jet guided laser beam generated from the liquid-jet guided laser head,
   wherein the liquid-jet guided laser beam comprises a laser beam internally reflected within a column of liquid,
   wherein the column of liquid is formed by flowing the liquid through a nozzle;
   flipping the substrate to have a second surface of the substrate facing the liquid-jet guided laser head,
   wherein the second surface is opposite the first surface;
   aligning each blind hole of the multiple blind holes with the liquid-jet guided laser beam;
   forming a through hole passing through the each blind hole by the liquid-jet guided laser beam;
   smoothing the through holes using a mechanical rotary tool.
18. A method as clause 17, further comprising
   detecting the liquid-jet guided laser beam forming the through hole by at least one of an optical sensor or an acoustic sensor.
19. A method as clause 17, further comprising
   inspecting the hole after the hole is smoothed by the mechanical rotary tool,
   wherein the inspection comprises a camera.
20. A method comprising
   forming a hole in a substrate using a liquid-jet guided laser beam,
   wherein the liquid-jet guided laser beam comprises a laser beam internally reflected within a column of liquid,
   wherein the column of liquid is formed by flowing the liquid through a nozzle;
   smoothing the hole using a mechanical rotary tool,
   wherein the mechanical rotary tool comprises an end portion comprising a synthetic diamond material.

## Claims

1. A method of forming a hole through a substrate using a liquid-jet guided laser beam, the method comprising:
directing a column of liquid at the substrate;
directing a laser beam into the column of liquid and at the substrate; and
moving the column of liquid and the laser beam on the substrate along a closed shape of the hole.

2. The method of claim 1, further comprising at least one of:
moving the column of liquid and the laser beam on the substrate along the closed shape multiple times; and
smoothing the hole after forming the hole using the column of liquid and the laser beam.

3. The method of claim 1, wherein at least one of:
the hole extends entirely through the substrate; and
the hole is an elongated slot.

4. The method of claim 1, further comprising flowing a gas around and coaxially with the column of liquid and the laser beam.

5. The method of claim 1, wherein:
the directing the column of liquid includes directing the column of liquid at a first side of the substrate;
the directing the laser beam includes directing the laser beam into the column of liquid and at the first side of the substrate; and
the moving includes moving the column of liquid and the laser beam on the first side of the substrate along the closed shape of the hole; and
the method further includes:
directing a second column of liquid at a second side of the substrate, the second side opposite the first side;
directing a second laser beam into the second column of liquid and at the second side of the substrate; and
moving the second column of liquid and the second laser beam on the second side of the substrate along the closed shape of the hole.

6. The method of claim 1, wherein the hole is between 75 and 99% of a final dimension of the hole.

7. The method of claim 1, wherein the substrate comprises at least one of silicon, silicon carbide, aluminum nitride, silicon nitride, titanium nitride, boron carbide, ceramic matrix composite (CMC), or metal matrix composite (MMC).

8. The method of claim 1, further comprising heating the substrate during the moving of the column of liquid and the laser beam on the substrate.

9. The method of claim 8, wherein the heating the substrate includes at least one of:
heating the substrate by flowing a liquid over the substrate using a nozzle;
heating the substrate using an infrared light source;
heating the substrate using an inductive heat source; and
heating the substrate by submerging the substrate in a fluid.

10. The method of claim 8, wherein the heating includes heating the substrate by completely submerging the substrate in the fluid.

11. The method of claim 8, wherein the heating the substrate includes heating the substrate using a heated gas.

12. The method of claim 1, further comprising heating the substrate before the moving of the column of liquid and the laser beam on the substrate.

13. The method of claim 1 further comprising:
detecting a cut through of the hole through the substrate; and
based on the detection of the cut through of the hole, selectively stopping:
the directing of the column of liquid at the substrate; and
the directing of the laser beam into the column of liquid.

14. The method of claim 13 wherein the detecting the cut through includes at least one of:
detecting the cut through using at least one of an optical sensor and an acoustic sensor; and
detecting the cut through when an increase in at least one of light and sound is measured by the at least one of the optical sensor and the acoustic sensor.

15. The method of claim 13 further comprising:
outputting light onto the substrate using a light source with a first wavelength that is different than a second wavelength of the laser beam,
wherein the detecting the cut through includes detecting the cut through based on detection of light of the first wavelength by an optical sensor.
